# EUROPEAN PATENT SPECIFICATION

(11) **EP 2 293 109 B1**
(45) Date of publication and mention of the grant of the patent: **18.07.2012**
(21) Application number: 10009048.9
(22) Date of filing: 31.08.2010
(51) Int. Cl.: G01T 1/166, G01T 1/29, G03B 42/08

(54) **Radiological image reader**
Leseeinrichtung für radiologische Bilder
Lecteur d'images radiologiques

(30) Priority: 02.09.2009 JP 2009202567
(43) Date of publication of application: 09.03.2011
(73) Proprietor: J. Morita Manufacturing Corporation, Kyoto-shi, Kyoto 612-8533 (JP)
(72) Inventor: Sugihara, Yoshito, Kyoto-shi Kyoto 612-8533 (JP); Yoshida, Yuuki, Kyoto-shi Kyoto 612-8533 (JP); Hayasi, Takeshi, Kyoto-shi Kyoto 612-8533 (JP); Suzuki, Masakazu, Kyoto-shi Kyoto 612-8533 (JP)
(74) Representative: Müller - Hoffmann & Partner

(56) References cited:
- JP-A- 1 006 919
- JP-A- 1 274 128
- US-B1- 6 268 613

## Description

### BACKGROUND OF THE INVENTION

### Field of the Invention

The present invention relates to a radiological image reader that reads radiological images from a medium having a radiological image forming surface including a photostimulable phosphor.

A radiological image reader that reads radiological images from an imaging plate irradiates a radiological image forming surface of the imaging plate with the excitation light emitted from a light source and detects the photostimulated luminescence light emitted from an irradiation point of the excitation light by a photodetector. The radiological image forming surface is scanned by the irradiation point of the excitation light. The radiological image forming surface is scanned by an irradiation point in a plurality of modes.

In the radiological image reader of Japanese Patent Application Laid-Open No. 61-267451, a transport mechanism linearly moves an imaging plate supported on a flat surface, and then an excitation light optical system linearly moves an irradiation point in a direction perpendicular to a linear movement direction of the imaging plate. In the radiological image reader of Japanese Patent Application Laid-Open No. 61-267451, however, the distance between the light source and the irradiation point cannot be maintained constant, and an angle of incidence of the excitation light with respect to the radiological image forming surface cannot be maintained constant, whereby radiological images cannot be read in a uniform manner.

In the radiological image reader in FIG. 2 of Japanese Patent Application Laid-Open No. 06-160998, a transport mechanism linearly moves an imaging plate supported on a cylindrical surface in an axis direction, and a rotation mechanism rotates an excitation light optical system around the axis. The radiological image reader of Japanese Patent Application Laid-Open No. 06-160998 has a problem that the imaging plate is susceptible to damage because it is curved. Moreover, in the radiological image reader of Japanese Patent Application Laid-Open No. 06-160998, mounting of the imaging plate is time consuming, which makes it difficult to continuously read radiological images from a large number of imaging plates. Note that there is also known a radiological image reader that rotates a cylindrical surface in place of rotating an excitation light optical system.

In the radiological image reader of Japanese Patent Publication No. 06-97328, a rotation mechanism rotates an imaging plate supported on a flat surface, and a transport mechanism linearly moves an excitation light optical system in a radial direction. In the radiological image reader of Japanese Patent Publication No. 06-97328, mounting of the imaging plate is time consuming, and thus it is difficult to continuously read radiological images from a large number of imaging plates.

In the radiological image reader of Japanese Patent No. 2580183, a transport mechanism linearly moves an imaging plate supported on a flat surface, and an excitation light optical system circularly moves an irradiation point on a running plane on which a radiological image forming surface of the imaging plate runs.

According to the radiological image reader of Japanese Patent No. 2580183, the above-mentioned problems are solved. However, a hole is formed in a mirror that reflects the photostimulated luminescence light and guides the reflected light to a photodetector, and thus the photostimulated luminescence light is not efficiently guided from the irradiation point to the photodetector, which results in insufficient sensitivity in reading of radiological images.

Document JP 1 006919 A discloses a radiograph reader which is configured to more exactly detect the intensity of emitted light by moving a spot projection part by excitation light to draw the locus of the circumference with a spacing distance between both end parts of an optical path mechanism as a radius. The spot projection part of the excitation light draws the locus of the circumference with a spacing distance between both end parts of the optical path mechanism as a radius when the optical mechanism is rotated by a rotational driving mechanism. Thereby not only the intensity of the emitted light detected by an emitted light detector but also the difference in the detected intensity of the emitted light and the time alleged during this time are obtained as information when reading is executed twice at a time interval. Thus, the intensity of the emitted light is thereby exactly detected.

Document US 6,268,613 B1 discloses a multiple-head phosphor screen scanner which is configured for reading an image stored on a photostimulable phosphor storage screen and comprises a rotatable frame having a center and an outer perimeter, a photo-multiplier tube mounted to the rotatable frame at a location proximal of the rotatable frame, a plurality of radially extending optical trains mounted to the rotatable frame at 120° to one another, each optical train configured to direct incident laser light towards the phosphor storage stream and to direct response radiation emitted by the phosphor storage stream in response to the incident light towards the photo-multiplier tube.

### SUMMARY OF THE INVENTION

An object of the present invention is to provide a radiological image reader capable of improving the sensitivity of reading a radiological image.

The object underlying the present invention is achieved by a radiological image reader according to independent claim 1. Preferred embodiments of the inventive radiological image reader are defined in the respective dependent claims.

The present invention is directed to a radiological image reader that reads a radiological image from a medium and has a radiological image forming surface including a photostimulable phosphor.

According to a first aspect of the present invention, a radiological image reader includes a holder, a light source, a scanning mechanism, a photodetector and a relative movement mechanism. The holder holds the medium in a flat manner. The light source emits excitation light. The scanning mechanism causes an optical path of the excitation light emitted from the light source to rotate around a rotation axis that is perpendicular to a scanning plane and is apart from the light source, and causes an irradiation point at which the excitation light emitted from the light source is irradiated to circularly move on the scanning plane. The scanning plane includes a radiological image forming surface of the medium held by the holder. The photodetector is provided on the rotation axis and detects photostimulated luminescence light emitted from the irradiation point. The relative movement mechanism causes the holder to move in a direction perpendicular to the rotation axis, relative to the scanning mechanism.

Accordingly, an angle of incidence of the excitation light to the radiological image forming surface is maintained constant, and a radiological image is read in a uniform manner. In addition, the medium is not curved, which suppresses damage to the medium. Further, incidence of the photostimulated luminescence light to the photodetector is not impeded, which improves the sensitivity of reading a radiological image. Moreover, the light source becomes apart from the rotation axis, which facilitates power feeding to the light source.

According to a second aspect of the present invention, in the first aspect, the scanning mechanism includes an excitation light optical system and a rotation mechanism. The excitation light optical system guides the excitation light to an irradiation point apart from the rotation axis. The rotation mechanism causes at least part of the excitation light optical system to rotate around the rotation axis. The excitation light optical system includes a first bending optical element. The first bending optical element is provided on the rotation axis and bends the excitation light that has reached from a direction in which the rotation axis extends toward the direction inclined with respect to the rotation axis. The rotation mechanism is configured to cause the first bending optical element to rotate around the rotation axis.

Accordingly, it is not required to rotate the light source, which facilitates power feeding to the light source.

According to a third aspect of the present invention, in the second aspect, the excitation light optical system further includes a second bending optical element. The second bending optical element is secured separately from the rotation mechanism on the rotation axis and guides the excitation light that has reached from the direction inclined with respect to the rotation axis to the first bending optical element by bending toward the direction in which the rotation axis extends.

Accordingly, the light source is easily separated from the rotation axis, which increases a degree of freedom in structure of the radiological image reader.

According to a fourth aspect of the present invention, in the second aspect, the radiological image reader further includes a photostimulated luminescence light optical system. The photostimulated luminescence light optical system guides the photostimulated luminescence light emitted from the irradiation point to the photodetector.

Accordingly, the photostimulated luminescence light emitted from the irradiation point is efficiently guided to the photodetector, which improves the sensitivity of reading a radiological image.

According to a fifth aspect of the present invention, in the fourth aspect, part of an optical path of the excitation light optical system and part of an optical path of the photostimulated luminescence light optical system pass through a common light guide part.

Accordingly, at least part of the excitation light optical system and part of the photostimulated luminescence light optical system rotate in synchronization with each other, and the photostimulated luminescence light emitted from the irradiation point is efficiently guided to the photodetector, leading to an improvement in reading of an radiological image.

According to a sixth aspect of the present invention, in the fifth aspect, the photostimulated luminescence light optical system is part of a structure provided between the photodetector and the scanning plane. A light guide part is formed in the structure. The light guide part has the light inlet for photostimulated luminescence light on a surface opposed to the scanning plane and a light outlet for photostimulated luminescence light on a surface opposed to the photodetector. The excitation light optical system is configured to guide the excitation light from the light source to the scanning plane via the light guide part.

Accordingly, the optical path of the excitation light and the optical path of the photostimulated luminescence light coexist inside the light guide part, and thus the radiological image reader is miniaturized.

According to a seventh aspect of the present invention, in the sixth aspect, an optical axis of the photostimulated luminescence light optical system is configured to pass through the irradiation point.

Accordingly, the photostimulated luminescence light emitted from the irradiation point is efficiently guided to the photodetector, which improves the sensitivity of reading a radiological image.

According to an eighth aspect of the present invention, in the fifth aspect, the photostimulated luminescence light optical system is part of a structure provided between the photodetector and the scanning plane. The rotation mechanism is configured to cause the structure to rotate around the rotation axis.

Accordingly, the structure is made simple to be easily rotated, which facilitates the rotation of the photostimulated luminescence light optical system.

According to a ninth aspect of the present invention, in the eighth aspect, the structure is a hollow body. A hollow light guide part as the light guide part is formed in the hollow body. The hollow light guide part has a light inlet for photostimulated luminescence light that is opposed to the scanning plane and a light outlet for photostimulated luminescence light that is opposed to the photodetector.

Accordingly, the photostimulated luminescence light is efficiently guided from the light inlet to the light outlet, which improves the sensitivity of reading a radiological image.

According to a tenth aspect of the present invention, in the eighth aspect, the structure includes a solid light guide part as the light guide part. The solid light guide part has a light inlet for photostimulated luminescence light that is opposed to the scanning plane and a light outlet for photostimulated luminescence light that is opposed to the photodetector.

Accordingly, the photostimulated luminescence light is efficiently guided from the light inlet to the light outlet, which improves the sensitivity of reading a radiological image.

Desirably, in the ninth or tenth aspect, the light guide part has an oval spherical shape, cylindrical shape or conical shape.

Desirably, in the ninth or tenth aspect, the structure includes a lens that is provided to the light inlet and is configured to guide the photostimulated luminescence light to an inside of the light guide part.

According to an eleventh aspect of the present invention, in the ninth or tenth aspect, the light inlet is formed apart from the rotation axis, and the light outlet is formed on the rotation axis.

Accordingly, the photostimulated luminescence light is guided to the light outlet formed on the rotation axis, and the photodetector is easily provided on the rotation axis, which simplifies the photostimulated luminescence light optical system.

According to a twelfth aspect of the present invention, in the fourth aspect, the photostimulated luminescence light optical system is part of a structure provided between the photodetector and the scanning plane to be secured separately from the rotation mechanism. A light guide part is formed in the structure. The light guide part has a light inlet for photostimulated luminescence light on a surface opposed to the scanning plane and a light outlet for photostimulated luminescence light on a surface opposed to the photodetector. A surface of the light guide part is a concave reflecting mirror that has rotation symmetry of the rotation axis and is configured to collect the photostimulated luminescence light entering from the light inlet to the light outlet.

Accordingly, the structure is secured, which simplifies the radiological image reader.

According to a thirteenth aspect of the present invention, in the eighth aspect, the radiological image reader further includes a blower mechanism guiding air toward the scanning plane.

Accordingly, the medium is pressed against the holder, which suppresses positional deviation of the medium.

According to a fourteenth aspect, in the eighth aspect, the radiological image reader further includes an optical filter. The optical filter is interposed between the photodetector and the structure. The optical filter has a higher transmittance of a wavelength of the photostimulated luminescence light than a transmittance of a wavelength of the excitation light.

Accordingly, the excitation light less affects the photodetector, which improves the sensitivity of reading a radiological image.

According to a fifteenth aspect of the present invention, in the first aspect, the radiological image reader further includes a housing and a dust collecting mechanism. The housing accommodates the light source, the scanning mechanism and the photodetector. The dust collecting mechanism collects dust inside the housing.

Accordingly, dust inside the housing decreases, and dust is prevented from adhering to the medium, which improves the accuracy of reading a radiological image.

According to a sixteenth aspect of the present invention, in the first aspect, the relative movement mechanism moves the medium relative to the scanning mechanism in a linear manner.

Accordingly, the transport mechanism is simplified.

According to a seventeenth aspect of the present invention, in the first aspect, the scanning mechanism is secured, and the relative movement mechanism moves the holder.

Accordingly, a large number of media are continuously read with ease. Further, the length from the light source to the irradiation point is maintained constant, whereby a radiological image is read in a uniform manner.

According to an eighteenth aspect of the present invention, in the first aspect, the holder is secured, and the relative movement mechanism is configured to move the scanning mechanism.

Accordingly, a footprint does not increase extremely even in a case where a large number of media are read.

According to a nineteenth aspect of the present invention, in the eighteenth aspect, the relative movement mechanism is configured to move the light source integrally with the scanning mechanism.

Accordingly, the length from the light source to the irradiation point is maintained constant, whereby a radiological image is read in a uniform manner.

### BRIEF DESCRIPTION OF THE DRAWINGS

FIG. 1 is a cross-sectional view of a reader according to a first preferred embodiment;
FIG. 2 is a perspective view of an internal mechanism of the reader according to the first preferred embodiment;
FIG. 3 is a top view showing a track of an irradiation point and a radiological image forming surface on a scanning plane;
FIG. 4 is a cross-sectional view of a rotary structure according to a second preferred embodiment;
FIG. 5 is a cross-sectional view of a rotary structure according to a third preferred embodiment;
FIG. 6 is a cross-sectional view of another rotary structure according to the third preferred embodiment;
FIG. 7 is a cross-sectional view of a rotary structure according to a fourth preferred embodiment;
FIG. 8 is a cross-sectional view of a rotary structure according to a fifth preferred embodiment;
FIG. 9 is a cross-sectional view of a rotation mechanism and a rotary structure according to a sixth preferred embodiment;
FIG. 10 is a cross-sectional view of another rotation mechanism and another rotary structure according to the sixth preferred embodiment;
FIG. 11 is a cross-sectional view of a rotation mechanism and a rotary structure according to a seventh preferred embodiment;
FIG. 12 is a cross-sectional view of a reading mechanism according to an eighth preferred embodiment;
FIG. 13 is a bottom view of a fixed structure according to the eighth preferred embodiment;
FIG. 14 is a cross-sectional view of a transport mechanism according to a ninth preferred embodiment;
FIG. 15 is a bottom view of the transport mechanism according to the ninth preferred embodiment;
FIG. 16 is a cross-sectional view of a transport mechanism according to a tenth preferred embodiment;
FIG. 17 is a top view showing an arrangement of imaging plates according to an eleventh preferred embodiment;
FIG. 18 is a cross-sectional view of a reader according to a twelfth preferred embodiment;
FIG. 19 is a perspective view of the reader according to the twelfth preferred embodiment; and
FIG. 20 is a cross-sectional view of a reader according to a thirteenth preferred embodiment.

### DESCRIPTION OF THE PREFERRED EMBODIMENTS

### (First preferred embodiment)

A first preferred embodiment relates to a radiological image reader 1002 that reads radiological images from a radiological image forming surface S of an imaging plate IP.

### (Imaging plate IP)

The imaging plate IP is a medium having the radiological image forming surface S including a photostimulable phosphor. When the radiological image forming surface S is irradiated with radial rays such as X-rays, a radiological image is drawn as a latent image on the radiological image forming surface S. The reader 1002 reads the radiological image from the radiological image forming surface S and generates image data of the radiological image.

### (Outline of reader 1002)

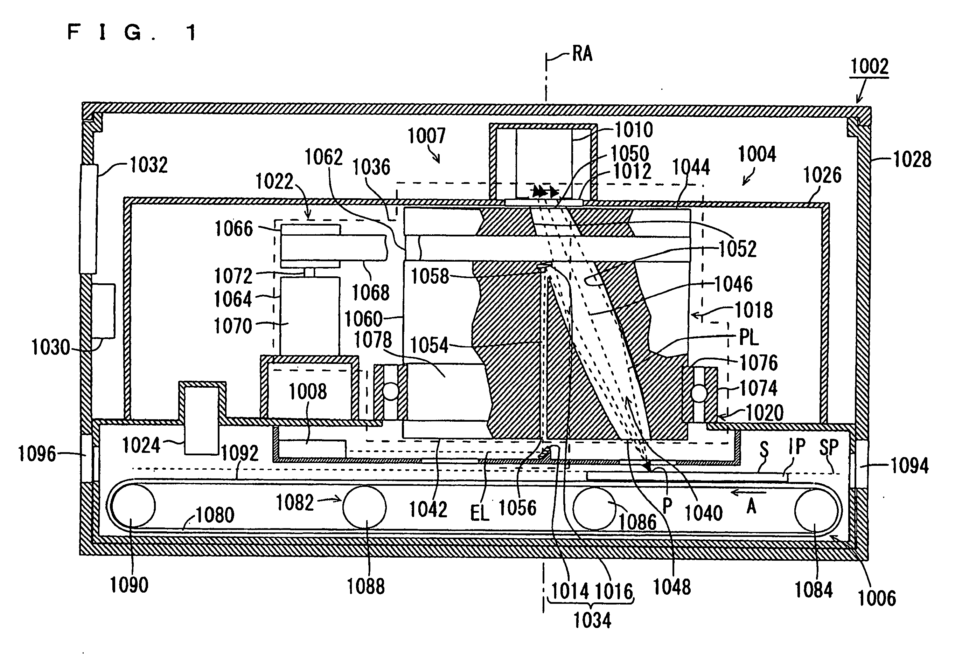

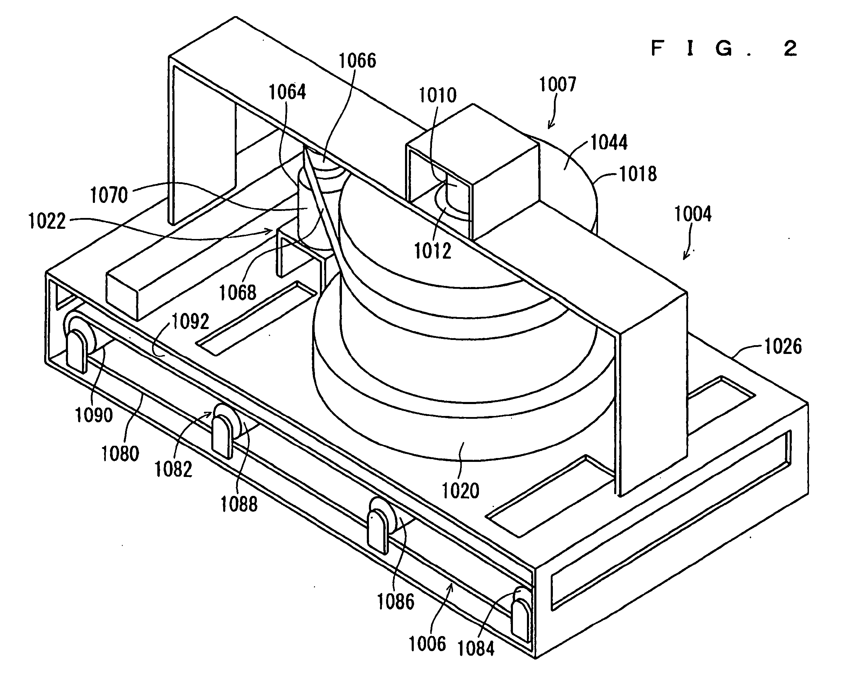

FIG. 1 is a schematic view of the reader 1002, which is a cross-sectional view of the reader 1002. FIG. 2 is a schematic view of an internal mechanism 1004 of the reader 1002, which is a perspective view of the internal mechanism 1004.

As shown in FIGS. 1 and 2, the reader 1002 includes a reading mechanism 1007 that reads radiological images from the radiological image forming surface S, a belt 1080 that holds the imaging plate IP, a belt drive mechanism 1082 that causes the belt 1080 to go therearound, a controller 1030 that controls the reader 1002, a dust collecting mechanism 1032 that collects dust, an erase beam light source 1024 that emits an erase beam, a frame 1026 that supports components, and a housing 1028 that accommodates those described above.

The imaging plate IP inserted into an inlet 1094 formed in the housing 1028 and carried into the reader 1002 is held in an outgoing portion of the belt 1080. The imaging plate IP held in the outgoing portion of the belt 1080 is transported to a direction A and passes below the reading mechanism 1007. The reading mechanism 1007 reads a radiological image drawn on the radiological image forming surface S of the imaging plate IP that passes therebelow.

### (Outline of reading mechanism 1007)

The reading mechanism 1007 includes an excitation light source 1008 that emits excitation light EL, a photodetector 1010 that detects photostimulated luminescence light PL, an optical filter 1012 that prevents the excitation light EL from entering the photodetector 1010, a fixed mirror 1014 that reflects the excitation light EL that has reached from a horizontal direction toward a direction in which a rotation axis RA extends and guides the reflected light, a rotating mirror 1016 that reflects the excitation light EL that has reached from the direction in which the rotation axis RA extends toward a direction inclined with respect to the rotation axis RA and guides the reflected light, a rotary structure 1018 that guides the photostimulated luminescence light PL emitted from an irradiation point P toward the photodetector 1010, a bearing 1020 that supports the rotary structure 1080, and a rotation mechanism 1022 that rotates the rotary structure 1018 around the rotation axis RA.

The excitation light source 1008 irradiates the fixed mirror 1014 with the excitation light EL, and thus the rotation axis RA is positioned at a position apart from the excitation light source 1008.

The excitation light EL is guided by the fixed mirror 1014 and the rotating mirror 1016 through bending of light, specifically, reflection.

In the present application, changing of an advancing direction of light through, for example, reflection, refraction, or both reflection and refraction is expressed by bending.

### (Relationship between rotation axis RA and scanning plane SP)

The rotation axis RA is perpendicular to the scanning plane SP including the radiological image forming surface S of the imaging plate IP held by the belt 1080. The imaging plate IP is transported to the direction perpendicular to the rotation axis RA, and the radiological image forming surface S moves on the scanning plane SP.

(Relationship between track TR of irradiation point P and movement of radiological image forming surface S)

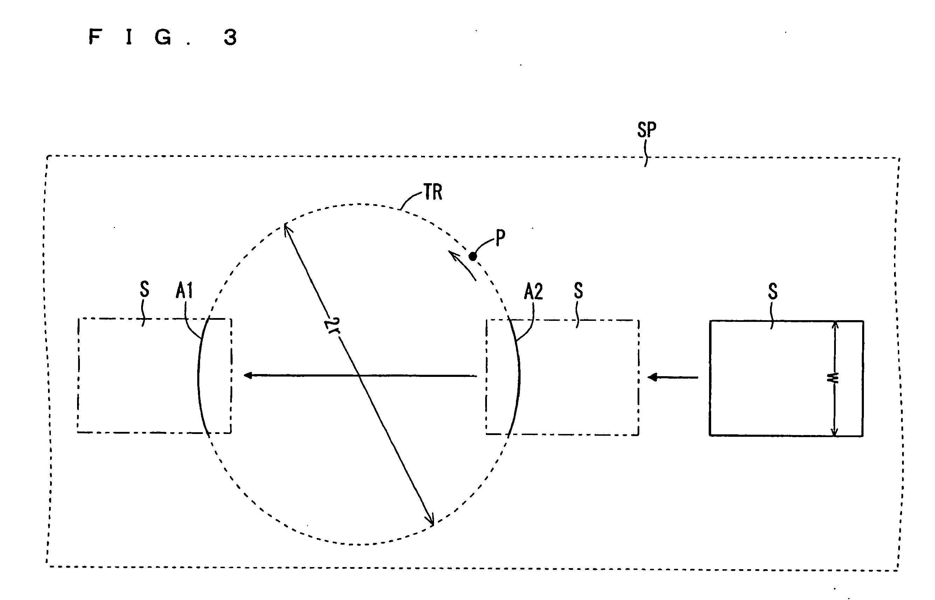

FIG. 3 is a top view showing a track TR of the irradiation point P and the radiological image forming surface S on the scanning plane SP.

As shown in FIG. 1, in particular, in FIG. 3, the reading mechanism 1007 causes the irradiation point P which is irradiated with the excitation light EL emitted from the excitation light source 1008 to circularly move on the scanning plane SP. The reader 1002 causes the radiological image forming surface S to sequentially pass through across positions of arcs A1 and A2 each occupying part of the track TR of the irradiation point P. As a result, the radiological image forming surface S is repeatedly scanned by the irradiation point P that moves on the arcs A1 and A2. The reading mechanism 1007 detects the photostimulated luminescence light PL emitted from the irradiation point P which scans the radiological image forming surface S.

### (Scanning mechanism 1036)

The scanning mechanism 1036 that is part of the reading mechanism 1007 and causes the irradiation point P to circularly move includes an excitation light optical system 1034 and the rotation mechanism 1022. The excitation light optical system 1034 includes the fixed mirror 1014 and the rotating mirror 1016 and guides the excitation light EL toward the irradiation point P apart from the rotation axis RA. The rotation mechanism 1022 causes the rotating mirror 1016 constituting part of the excitation light optical system 1034 to rotate around the rotation axis RA together with the rotary structure 1018. Owing to the scanning mechanism 1036, the distance of an optical path from the excitation light source 1008 to the irradiation point P is maintained constant, and the angle of incidence of the excitation light EL with respect to the radiological image forming surface S is maintained constant, with the result that radiological images are read in a uniform manner.

### (Excitation light optical system 1034)

The excitation light optical system 1034 may include an optical element other than the fixed mirror 1014 and the rotating mirror 1016. For example, the excitation light optical system 1034 may include a mirror that bends the excitation light EL further and guides the bent light, a lens that collects or converges the excitation light EL, or the like. A prism or the like may be used as a bending optical element that bends the excitation light EL and guides the bent light.

In a case where a prism is used, the excitation light EL is guided through reflection, refraction or the like.

In the example shown in FIG. 1, the excitation light optical system 1034 that guides the excitation light EL to the imaging plate IP is formed of a light guide part that bends light.

In the present invention, the optical elements that bend and guide light are expressed by terms for a bending optical element.

The fixed mirror 1014 and the rotating mirror 1016 are examples of the bending optical elements.

The bending optical element is an example of a component constituting the light guide part that bends light.

Examples of the component of the light guide part that bends the light, which is employed in the present application, include a bending optical element, a reflection optical system, a refraction optical system, a reflection and refraction optical system and a reflecting mirror, and any of them may be used.

For example, in order to guide the excitation light EL emitted from the excitation light source 1008 toward the direction in which the rotation axis RA extends, a curved or bent hollow waveguide (not shown) or an optical fiber (not shown) such as a quartz fiber may be arranged in place of using the fixed mirror 1014. In order to guide the excitation light EL that has reached from the direction in which the rotation axis RA extends toward the direction inclined with respect to the rotation axis RA, a curved or bent hollow waveguide (not shown) or an optical fiber (not shown) such as a quartz fiber may be arranged in place of using the rotating mirror 1016.

In the description below, terms for reflection are used for bending of light in many cases, but not limited to reflection, components capable of bending light are appropriately used.

### (Rotating mirror 1016)

The rotating mirror 1016 bends the excitation light EL that has reached from the direction in which the rotation axis RA extends toward the direction inclined with respect to the rotation axis RA. The excitation light EL that has bent by the rotating mirror 1016 is guided to the irradiation point P apart from the rotation axis RA.

The rotating mirror 1016 is provided on the rotation axis RA. The rotating mirror 1016 is fixed to the rotary structure 1018 within the rotary structure 1018. Owing to the rotating mirror 1016, the optical path of the excitation light EL is not required to be rotated before reaching the rotating mirror 1016, and thus the excitation light source 1008 needs not to be moved. Accordingly, as shown FIG. 1, the excitation light source 1008 can be fixed to and disposed in the frame 1026 apart from the rotation mechanism 1022 and the rotary structure 1018, which facilitates power feeding to the excitation light source 1008.

The rotating mirror 1016 integrated with the rotary structure 1018 rotates around the rotation axis RA in synchronization with the rotary structure 1018, and thus the optical path of the excitation light EL that ranges from the rotating mirror 1016 to the scanning plane SP rotates around the rotation axis RA, and the irradiation point P circularly moves on the scanning plane SP. When the rotary structure 1018 and the rotating mirror 1016 are rotated in synchronization with each other, a position at which the photostimulated luminescence light PL is obtained in a light guide part 1046 described below can be maintained constant. Accordingly, the photostimulated luminescence light PL emitted from the irradiation point P is efficiently guided to the photodetector 1010, which improves the sensitivity of reading a radiological image.

The inclination of a reflecting surface of the rotating mirror 1016 with respect to a horizontal direction affects the distance between the rotation axis RA and the irradiation point P, that is, a diameter 2r of the track TR of the irradiation point P (see FIG. 3). The reflecting surface of the rotating mirror 1016 is inclined with respect to the horizontal direction such that the diameter 2r of the track TR is at least larger than a width w of the radiological image forming surface S (see FIG. 3). Accordingly, the entire radiological image forming surface S is scanned by the irradiation point P. The "width w of the radiological image forming surface S" is a dimension of the radiological image forming surface S in the direction perpendicular to a transport direction of the imaging plate IP.

The rotating mirror 1016 is provided on the rotation axis RA and thus does not move even when rotating around the rotation axis RA. Further, the reflecting surface of the rotating mirror 1016 is merely required to reflect the excitation light EL that has reached by passing through the rotation axis RA. Therefore, it suffices that the reflecting surface of the rotating mirror 1016 is slightly larger than a cross-section of a beam of the excitation light EL.

### (Fixed mirror 1014)

The fixed mirror 1014 bends the excitation light EL that has reached from the horizontal direction toward the direction in which the rotation axis RA extends and guides the bent light to the rotating mirror 1016. The direction of the excitation light EL that reaches the fixed mirror 1014 is not required to be horizontal, and is only required to be a direction inclined with respect to the direction in which the rotation axis RA extends. The excitation light source 1008 is made apart from the rotation axis RA thanks to the fixed mirror 1014, and thus power feeding to the excitation light source 1008 is facilitated, which increases a degree of freedom in structure of the reader 1002.

The fixed mirror 1014 is provided on the rotation axis RA. The fixed mirror 1014 is fixed to the frame 1026 separately from the rotation mechanism 1022 outside the rotary structure 1018. When the fixed mirror 1014 is provided outside the rotary structure 1018, the excitation light EL is guided to the fixed mirror 1014 without being interfered by the rotary structure 1018. The direction inclined with respect to the direction in which the rotation axis RA extend may be a direction perpendicular to the direction in which the rotation axis RA.

The fixed mirror 1014 is provided between a lower surface 1042 of the rotary structure 1018 and the scanning plane SP. Accordingly, the photodetector 1010 and the fixed mirror 1014 are separated from each other by the rotary structure 1018, which prevents the stray light of the excitation light EL from entering the photodetector 1010. Further, the excitation light EL is not shielded by the imaging plate IP.

Inclination of the reflecting surface of the fixed mirror 1014 with respect to the horizontal direction depends on the direction from which the excitation light EL comes. In the example of FIG. 1, the reflecting surface of the fixed mirror 1014 is inclined with respect to the horizontal direction so as to bend the excitation light EL that has come toward the direction in which the rotation axis RA extends.

### (Excitation light source 1008)

Specifically, a wavelength of the excitation light EL emitted from the excitation light source 1008 is determined in accordance with a wavelength of the light with which the imaging plate IP is effectively excited. For example, as to an imaging plate IP that is currently on the market, the light having a wavelength of 500 to 800 nm can be used in many cases, and any light source can be used as the excitation light source 1008 as long as it emits the light having the above-mentioned wavelength band.

The excitation light source 1008 is desirably a laser light source. This results in a thinner beam of the excitation light EL and a smaller irradiation point P, which improves the accuracy of reading radiological images. Further, the excitation light source 1008 is desirably a semiconductor laser light source. Accordingly, the reader 1002 is miniaturized.

In the reader 1002, the excitation light source 1008 is not required to be rotated, and thus the excitation light source 1008 is separated from the rotation mechanism 1022 and fixed to the frame 1026. As a result, power feeding to the excitation light source 1008 is facilitated. Further, the excitation light source 1008 is made apart from the rotation axis RA due to the presence of the fixed mirror 1014, which facilitates power feeding to the excitation light source 1008.

### (Photodetector 1010)

The photodetector 1010 detects the photostimulated luminescence light PL that has been emitted from the irradiation point P and arrived via the rotary structure 1018. The photodetector 1010 generates a signal corresponding to the strength of the detected photostimulated luminescence light PL.

The photodetector 1010 is desirably a photomultiplier, a photodiode or the like.

The photostimulated luminescence light PL is the light having a wavelength of 350 to 450 nm in many cases, and a detector that detects the light of the above-mentioned wavelength band is preferably used as the photodetector 1010, which may be appropriately selected in accordance with a wavelength of the photostimulated luminescence light emitted from the imaging plate IP.

In the reader 1002, the photodetector 1010 is not required to be rotated, and thus the photodetector 1010 is separated from the rotation mechanism 1022 and fixed to the frame 1026. As a result, power is easily fed to the photodetector 1010 and a signal from the photodetector 1010 is easily obtained. The photodetector 1010 is opposed to a light outlet 1050 of the rotary structure 1018 with the optical filter 1012 being sandwiched therebetween.

The photodetector 1010 is provided on the rotation axis RA. This is enabled by making the excitation light source 1008 apart from the rotation axis RA and separating the excitation light source 1008 from the photodetector 1010 by the rotary structure 1018. As a result, the excitation light optical system 1034 that guides the excitation light EL to the irradiation point P does not prevent the photostimulated luminescence light PL from entering the photodetector 1010, which improves the sensitivity of reading a radiological image.

### (Optical filter 1012)

In the optical filter 1012, the transmittance at a wavelength of the photostimulated luminescence light PL is higher than the transmittance at a wavelength of the excitation light EL. Accordingly, the excitation light EL less affects the photodetector 1010, leading to an improvement in the sensitivity of reading a radiological image.

A wavelength dependence of the transmittance of the optical filter 1012 is determined in accordance with a type of a photostimulable phosphor to be used. In a case where barium fluoride halide containing europium as an activator is used as a photostimulable phosphor, a photostimulable phosphor is irradiated with red excitation light EL, and near-ultraviolet photostimulated luminescence light PL is detected, for example, a blue filter is used as the optical filter 1012.

The optical filter 1012 has a plate-like shape.

The optical filter 1012 is interposed between the photodetector 1010 and the light outlet 1050 of the rotary structure 1018. The optical filter 1012 is fixed to the frame 1026. The optical filter 1012 may be attached to an upper surface 1044 of the rotary structure 1018 so that the light outlet 1050 of the rotary structure 1018 is covered with the optical filter 1012. The optical filter 1012 may be attached to a lower surface of the photodetector 1010 so that a light receiving part of the photodetector 1010 is covered with the optical filter 1012.

### (Photostimulated luminescence light optical system 1040)

The photostimulated luminescence light optical system 1040 that guides the photostimulated luminescence light PL emitted from the irradiation point P on the scanning plane SP to the photodetector 1010 is part of the rotary structure 1018. The rotary structure 1018 is configured so as to be easily rotated, and thus the photostimulated luminescence light optical system 1040 is easily rotated by making the photostimulated luminescence light optical system 1040 part of the rotary structure 1018.

### (Rotary structure 1018)

An outer shape of the rotary structure 1018 is approximately cylindrical. A cylinder axis of the rotary structure 1018 is positioned at the same position as the rotation axis RA.

The rotary structure 1018 is provided between the photodetector 1010 and the scanning plane SP. The lower surface 1042 of the rotary structure 1018 is opposed to the scanning plane SP and is parallel to the scanning plane SP. The upper surface 1044 of the rotary structure 1018 is opposed to the photodetector 1010.

### (Light guide part 1046)

The rotary structure 1018 is a hollow body in which a hollow light guide part 1046 that guides the photostimulated luminescence light PL from the irradiation point P to the photodetector 1010 is formed. The light guide part 1046 has, on the lower surface 1042 of the rotary structure 1018 that is opposed to the scanning plane SP, the light inlet 1048 for the photostimulated luminescence light PL that is opposed to the scanning plane SP in a similar manner, and has on the upper surface 1044 of the rotary structure 1018 that is opposed to the photodetector 1010, the light outlet 1050 for the photostimulated luminescence light PL that is opposed to the photodetector 1010 in a similar manner. A surface (which represents an inner surface of the hollow in the rotary structure 1018 according to the first preferred embodiment) 1052 of the light guide part 1046 has an oval spherical surface shape. That is, the light guide part 1046 has an oval spherical body shape. The surface 1052 of the light guide part 1046 is subjected to mirror finishing for efficiently reflecting the photostimulated luminescence light PL. A reflecting film for reflecting the photostimulated luminescence light PL may be formed on the surface 1052 of the light guide part 1046. The surface 1052 serves as the reflecting surface in a case of mirror finishing and a case of forming a reflecting film. The photostimulated luminescence light PL entering from the light inlet 1048 is reflected on the surface 1052 of the light guide part 1046, and is guided to the photodetector 1010 via the light outlet 1050. The photostimulated luminescence light PL is efficiently guided from the light inlet 1048 to the light outlet 1050 by the light guide part 1046, and thus the sensitivity of reading a radiological image is improved.

An optical axis of the light guide part 1046 that serves as the photostimulated luminescence light optical system 1040 desirably passes through the irradiation point P. Accordingly, the photostimulated luminescence light PL emitted from the irradiation point P is efficiently guided to the photodetector 1010, which improves the sensitivity of reading a radiological image. In the case where the surface 1052 of the light guide part 1046 forms an oval spherical surface, the optical axis of the light guide part 1046 coincides with a long axis of an oval sphere body having the oval spherical surface. Therefore, the surface 1052 of the light guide part 1046 has rotation symmetry of optical axis.

The light inlet 1048 is made apart from the rotation axis RA, and the light outlet 1050 is formed on the rotation axis RA. Accordingly, the photodetector 1010 is disposed on the rotation axis RA separately from the rotation mechanism 1022 and the rotary structure 1018, which makes it easy to feed power to the photodetector 1010 and obtain a signal from the photodetector 1010. Further, the photostimulated luminescence light optical system 1040 is simplified.

### (Light guide part 1054)

A hollow light guide part 1054 that guides the excitation light EL from the fixed mirror 1014 to the rotating mirror 1016 is also formed in the rotary structure 1018. The light guide part 1054 has a light inlet 1056 for the excitation light EL on the lower surface 1042 of the rotary structure 1018 and a confluence 1058 at which the light guide part 1054 joins the light guide part 1046 on the surface 1052 of the light guide part 1046. The light guide part 1054 is provided on the rotation axis RA. The light guide part 1054 extends in the rotation axis RA direction. The rotating mirror 1016 is provided to the confluence 1058. The excitation light EL entering from the light inlet 1056 reaches the rotating mirror 1016 by passing through the light guide part 1054, is reflected by the rotating mirror 1016, and then passes through the light guide part 1046 to be guided to the scanning plane SP via the light inlet 1048. Accordingly, the excitation light optical system 1034 guides the excitation light EL from the excitation light source 1008 to the scanning plane SP via the light guide part 1046. That is, part of the optical path of the excitation light optical system 1034 and part of the optical path of the photostimulated luminescence light optical system 1040 pass through the common light guide part 1054. This contributes to causing the optical path of the excitation light EL and the optical path of the phosphoresecent light PL to coexist inside the rotary structure 1018 for miniaturizing the reader 1002.

The light guide part 1054 may be hollow or formed by a solid body, and may be appropriately formed of, for example, a resin such as an acrylic resin and one having excellent transmittance efficiency such as glass. The light guide part 1054 may be formed of a solid body including a single material, or may be formed of a solid body including a plurality of materials, such as an optical fiber formed by collecting a plurality of optical fibers.

### (Other items of rotary structure 1018)

A belt groove 1062 over which a belt 1068 of the rotation mechanism 1022 is hung is formed on a side surface 1060 of the rotary structure 1018. The width of the belt groove 1062 is slightly larger than the width of the belt 1068. The belt groove 1062 extends in a circumferential direction of the rotary structure 1018. In place of forming the belt groove 1062 on the side surface 1060 of the rotary structure 1018, a pulley may be provided to the side surface 1060 of the rotary structure 1018.

A bearing groove 1078 to which an inner ring 1076 of the bearing 1020 is fixed is formed on the side surface 1060 of the rotary structure 1018.

A desirable material of the rotary structure 1018 is a resin that is easily formed, though not limited thereto.

### (Rotation mechanism 1022)

The rotation mechanism 1022 includes a motor 1064 that generates a driving force for rotation, a pulley 1066 that adjusts a ratio of rotation, and the belt 1068 that transmits a driving force of the motor 1064 to the rotary structure 1018. A motor-housing 1070 of the motor 1064 is fixed to the frame 1026. The pulley 1066 is fixed to a shaft 1072 of the motor 1064. The belt 1068 is hung over the pulley 1066 and the belt groove 1062.

### (Bearing 1020)

The bearing 1020 supports the rotary structure 1018 in a state where the rotary structure 1018 is capable of being rotated around the rotation axis RA. An outer ring 1074 of the bearing 1020 is fixed to the frame 1026, and the inner ring 1076 of the bearing 1020 is fixed to the bearing groove 1078 of the rotary structure 1018.

While FIG. 1 shows the case where the bearing 1020 is a roller bearing, the rotary structure 1018 may be supported by a sliding bearing, a fluid dynamic bearing or the like.

### (Transport mechanism 1006)

A transport mechanism 1006 includes the belt 1080 that holds the imaging plate IP in a flat manner and the belt drive mechanism 1082 that causes the belt 1080 to go therearound.

The belt 1080 has a larger width compared with the imaging plate IP and has no end.

The belt drive mechanism 1082 includes rollers 1084, 1086, 1088 and 1090. The roller 1084 positioned at one end of the belt drive mechanism 1082 is on an upstream side of a transport direction with respect to the track TR of the irradiation point P, whereas the roller 1090 positioned at the other end of the belt drive mechanism 1082 is on a downstream side of the transport direction with respect to the track TR of the irradiation point P. The number of rollers provided between the roller 1084 and the roller 1090 may be increased or reduced.

The respective rollers 1084, 1086, 1088 and 1090 are capable of rotating around the rotation axis extending in the direction that is parallel to the scanning plane SP and is perpendicular to the transport direction. The roller 1084 or the roller 1090 is applied with the driving force for rotation.

The belt 1080 is hung over the rollers 1084, 1086, 1088 and 1090 and is caused to go therearound. An upper surface of the outgoing portion of the belt 1080 that travels from the roller 1084 toward the roller 1090 and is opposed to the lower surface 1042 of the rotary structure 1018 becomes a holding surface 1092 on which the imaging plate IP whose radiological image forming surface S faces upward is placed.

The holding surface 1092 is part of the belt 1080 being a component of the transport mechanism 1006 that transports the imaging plate IP and also is a holder that holds the imaging plate IP.

The outgoing portion of the belt 1080 holds the imaging plate IP in a flat manner and is linearly moved relative to the fixed reading mechanism 1007 by the belt drive mechanism 1082. Accordingly, the holding surface 1092 is moved in the direction perpendicular to the rotation axis RA with respect to the scanning mechanism 1036, and the imaging plate IP placed on the holding surface 1092 is linearly transported in the direction perpendicular to the rotation axis RA with respect to the fixed scanning mechanism 1036. The imaging plate IP is linearly moved relative to the scanning mechanism 1036. When the imaging plate IP is held in a flat manner, the imaging plate IP is not curved, which prevents the imaging plate IP from being damaged. In addition, when the imaging plate IP is linearly transported, the transport mechanism 1006 is simplified.

The transport mechanism 1006 is an example of a relative movement mechanism that moves a holder formed of the holding surface 1092 in the direction perpendicular to the rotation axis RA relative to the scanning mechanism 1036.

In the relative movement mechanism, the holder may move with respect to the scanning mechanism, the scanning mechanism may move with respect to the holder, or the holder and the scanning mechanism may move. In any case, the holder moves relative to the scanning mechanism.

### (Dust collecting mechanism 1032)

The dust collecting mechanism 1032 collects dust inside the housing 1028. As a result, dust inside the housing 1028 decreases, and thus dust is prevented from adhering to the imaging plate IP, which improves the accuracy of reading a radiological image.

The dust collecting mechanism 1032 is achieved by, for example, mounting an exhaust fan to which a dust collecting filter is attached onto an exhaust port of the housing 1028.

### (Erase beam light source 1024)

The erase beam light source 1024 irradiates the imaging plate IP after the radiological image is read with an erase beam for erasing a radiological image.

The erase beam light source 1024 is provided on the downstream side of the transport direction with respect to the track TR of the irradiation point P and above the scanning plane SP. The erase beam light source 1024 irradiates the scanning plane SP with an erase beam toward the scanning plane SP. Accordingly, reading of a radiological image to erase of a radiological image is completed inside the reader 1002.

### (Controller 1030)

The controller 1030 feeds power to the excitation light source 1008 and the erase beam light source 1024 to control lighting of the excitation light source 1008 and the erase beam light source 1024.

In addition, the controller 1030 feeds power to the transport mechanism 1006 to control transportation of the imaging plate IP by the transport mechanism 1006.

Moreover, the controller 1030 feeds power to the photodetector 1010 to control the photodetector 1010, and obtains a signal generated by the photodetector 1010 to produce image data. The image data may be produced by a device outside the housing 1028.

### (2 Second preferred embodiment)

A second preferred embodiment relates to a rotary structure 2018 employed in place of the rotary structure 1018 according to the first preferred embodiment.

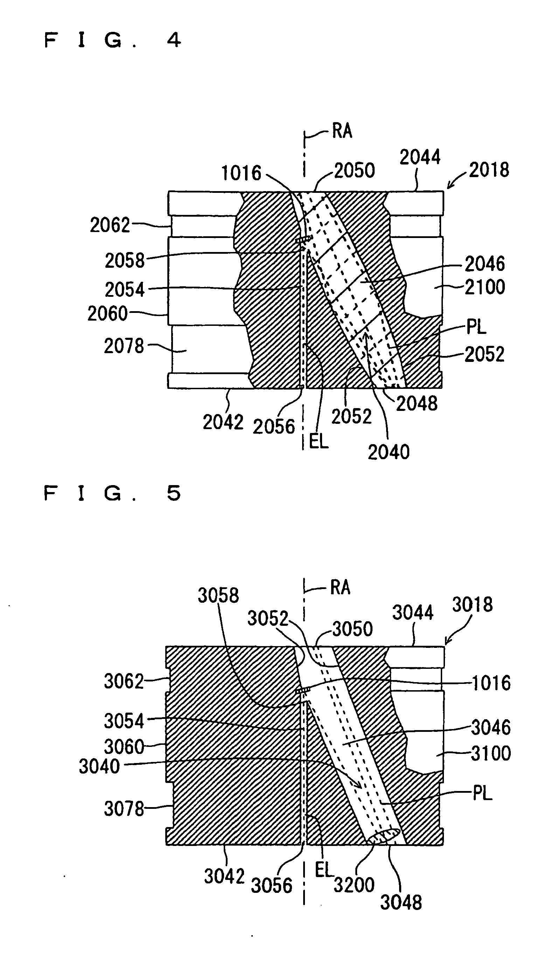

FIG. 4 is a schematic view of the rotary structure 2018 according to the second preferred embodiment, which is a cross-sectional view of the rotary structure 2018.

An outer shape of the rotary structure 2018 is approximately cylindrical as in the rotary structure 1018 according to the first preferred embodiment. A cylinder axis of the rotary structure 2018 coincides with the rotation axis RA.

The rotary structure 2018 is provided between the photodetector 1010 and the scanning plane SP. A lower surface 2042 of the rotary structure 2018 is opposed to the scanning plane SP and is parallel to the scanning plane SP. An upper surface 2044 of the rotary structure 2018 is opposed to the photodetector 1010.

### (Light guide part 2046)

The rotary structure 2018 is formed of a solid body in which a light guide part 2046 of translucent body is provided inside a translucent body accommodating part formation 2100, in place of the hollow light guide part 1046 according to the first preferred embodiment. The light guide part 2046 has, on the lower surface 2042 of the rotary structure 2018, a light inlet 2048 for the photostimulated luminescence light PL that is opposed to the scanning plane SP, and has on the upper surface 2044 of the rotary structure 2018, a light outlet 2050 for the photostimulated luminescence light PL that is opposed to the photodetector 1010.

A surface (which represents an outer surface of the translucent body in the rotary structure 2018 according to the second preferred embodiment) 2052 of the light guide part 2046 has an oval spherical surface shape. That is, the light guide part 2046 has an oval spherical body shape. A refractive index of the light guide part 2046 is determined such that the surface 2052 of the light guide part 2046, that is, an interface between the light guide part 2046 and an outside thereof is a total reflection surface for the photostimulated luminescence light PL when viewed from the inside of the light guide part 2046. A reflecting film for reflecting the photostimulated luminescence light PL may be formed on the surface 2052 of the light guide part 2046. The photostimulated luminescence light PL entering from the light inlet 2048 is reflected on the surface 2052 of the light guide part 2046, and is guided to the photodetector 1010 via the light outlet 2050. The photostimulated luminescence light PL is efficiently guided from the light inlet 2048 to the light outlet 2050 by the light guide part 2046, and thus the sensitivity of reading a radiological image is improved.

An optical axis of the light guide part 2046 desirably passes through the irradiation point P. Accordingly, the photostimulated luminescence light PL emitted from the irradiation point P is efficiently guided to the photodetector 1010, which improves the sensitivity of reading a radiological image. In the case where the surface 2052 of the light guide part 2046 forms an oval spherical surface, the optical axis of the light guide part 2046 coincides with a long axis of an oval sphere body having the oval spherical surface. Therefore, the surface 2052 of the light guide part 2046 has rotation symmetry of optical axis.

The light inlet 2048 is made apart from the rotation axis RA, and the light outlet 2050 is formed on the rotation axis RA. Accordingly, the photodetector 1010 is disposed on the rotation axis RA separately from the rotation mechanism 1022 and the rotary structure 2018, which makes it easy to feed power to the photodetector 1010 and obtain a signal from the photodetector 1010. Further, the photostimulated luminescence light optical system 2040 is simplified.

### (Light guide part 2054)

A light guide part 2054 formed of translucent body that guides the excitation light EL from the fixed mirror 1014 to the rotating mirror 1016 is also formed in the rotary structure 2018. The light guide part 2054 has a light inlet 2056 for the excitation light EL on the lower surface 2042 of the rotary structure 2018 and a confluence 2058 at which the light guide part 2054 joins the light guide part 2046 on the surface 2052 of the light guide part 2046. The light guide part 2054 extends in the rotation axis RA direction. The light guide part 2054 is provided on the rotation axis RA. The rotating mirror 1016 is provided to the confluence 2058. The excitation light EL entering from the light inlet 2056 reaches the rotating mirror 1016 by passing through the light guide part 2054, is reflected by the rotating mirror 1016, and then passes through the light guide part 2046 to be guided to the scanning plane SP via the light inlet 2048.

A whole of the light guide part 2054 and the light guide part 2046 may be formed of an integrated solid body of translucent body, but a part thereof may be formed of an integrated solid body of translucent body.

### (Other items of rotary structure 2018)

A belt groove 2062 and a bearing groove 2078 similarly to the belt groove 1062 and the bearing groove 1078 according to the first preferred embodiment are formed on a side surface 2060 of the rotary structure 2018.

There may also be employed a rotary structure in which the translucent body accommodating part formation 2100 that is filled with the light guide parts 2046 and 2054 is omitted, which makes support thereof difficult.

A desirable material of the rotary structure 2018 is a resin that is easily formed, though not limited thereto. In particular, an acrylic resin or the like is desirable for a material of the light guide part 2046, but one having an excellent transmittance efficiency such as glass may be appropriately used. The light guide part 2046 may be formed of a solid body including a single material, or may be formed of a solid body including a plurality of materials, such as an optical fiber formed by collecting a plurality of optical fibers.

As in the light guide part 1054 according to the first preferred embodiment, the light guide part 2054 may be formed hollow or formed by a solid body.

### (3 Third preferred embodiment)

A third preferred embodiment relates to a rotary structure 3018 that is employed in place of the rotary structure 1018 of the first preferred embodiment.

FIG. 5 is a schematic view of the rotary structure 3018 according to the third preferred embodiment, which is a cross-sectional view of the rotary structure 3018.

An outer shape of the rotary structure 3018 is approximately cylindrical. A cylinder axis of the rotary structure 3018 is positioned at the same position as the rotation axis RA.

The rotary structure 3018 is provided between the photodetector 1010 and the scanning plane SP. A lower surface 3042 of the rotary structure 3018 is opposed to the scanning plane SP and is parallel to the scanning plane SP. An upper surface 3044 of the rotary structure 3018 is opposed to the photodetector 1010.

As shown in FIG. 5, the rotary structure 3018 includes a hollow formation 3100 and a lens 3200 that guides the photostimulated luminescence light PL toward an inside of a light guide part 3046.

### (Light guide part 3046)

The hollow formation 3100 is a hollow body in which a hollow light guide part 3046 that guides the photostimulated luminescence light PL from the irradiation point P to the photodetector 1010 is formed. As in the rotary structure 2018 according to the second preferred embodiment, a light guide part that is formed of a translucent body and is solid may be formed in place of the hollow light guide part 3046. In the case of the solid guide light part, a desirable material thereof is an acrylic resin or the like, and one having an excellent transmittance efficiency such as glass may be appropriately used. The light guide part 3046 may be formed of a solid body including a single material, or may be formed of a solid body including a plurality of materials, such as an optical fiber formed by collecting a plurality of optical fibers. A SELFOC lens may be used. In the case of the solid light guide part, the lens 3200 may be omitted.

As in the light guide part 1054 according to the first preferred embodiment, the light guide part 3054 may be formed hollow or formed by a solid body.

A whole of the light guide part 3054 and the light guide part 3046 may be formed of an integrated solid body of translucent body, but a part thereof may be formed of an integrated solid body of translucent body.

The light guide part 3046 has, on the lower surface 3042 of the rotary structure 3018, a light inlet 3048 for the photostimulated luminescence light PL that is opposed to the scanning plane SP, and has on the upper surface 3044 of the rotary structure 3018, a light outlet 3050 for the photostimulated luminescence light PL that is opposed to the photodetector 1010. A surface (which represents an inner surface of the hollow in the rotary structure 3018 according to the third preferred embodiment) 3052 of the light guide part 3046 has a cylindrical surface shape. That is, the light guide part 3046 is cylindrical in shape. Strictly speaking, the cylinder in this case has a shape obtained by obliquely cutting the top and bottom of the cylinder.

The surface 3052 of the light guide part 3046 may form an oval spherical surface as in the rotary structure 1018 according to the first preferred embodiment. The photostimulated luminescence light PL entering from the light inlet 3048 is collected by the lens 3200 and is guided to the photodetector 1010 via the light outlet 3050. The photostimulated luminescence light PL is efficiently guided from the light inlet 3048 to the light outlet 3050 by the light guide part 3046, and thus the sensitivity of reading a radiological image is improved.

The light inlet 3048 is made apart from the rotation axis RA, and the light outlet 3050 is formed on the rotation axis RA. Accordingly, the photodetector 1010 is disposed on the rotation axis RA separately from the rotation mechanism 1022 and the rotary structure 3018, which makes it easy to feed power to the photodetector 1010 and obtain a signal from the photodetector 1010. Further, a photostimulated luminescence light optical system 3040 is simplified.

### (Light guide part 3054)

A hollow light guide part 3054 that guides the excitation light EL from the fixed mirror 1014 to the rotating mirror 1016 is also formed in the rotary structure 3018. The light guide part 3054 has a light inlet 3056 for the excitation light EL on the lower surface 3042 of the rotary structure 3018 and a confluence 3058 at which the light guide part 3054 joins the light guide part 3046 on the inner surface 3052 of the light guide part 3046. The light guide part 3054 extends in the rotation axis RA direction. The light guide part 3054 is provided on the rotation axis RA. The rotating mirror 1016 is provided to the confluence 3058. The excitation light EL entering from the light inlet 3056 reaches the rotating mirror 1016 by passing through the light guide part 3054, is reflected by the rotating mirror 1016, and then passes through the light guide part 3046 to be guided to the scanning plane SP via the light inlet 3048.

In the example shown in FIG. 5, the surface 3052 of the light guide part 3046 is a cylindrical surface of approximately a cylinder, strictly speaking, a cylindrical inner surface that is an inside of the cylinder. The cross-sectional shape of the light guide part 3046 becomes particularly large in the vicinity of the confluence 3058 due to the positioning of the rotating mirror 1016 and joining of a path of the excitation light EL in the vicinity of the confluence 3058. Alternatively, the cross-sectional shape of the light guide part 3046 may be uniform between the light inlet 3048 and the light outlet 3050 and may be preferably a true circle. In addition the light guide part 3046 may have a linear long axis. In this case, the configuration easily processed by drilling is obtained.

Further, the shape may be one obtained by adding a portion of an oval spherical surface to part of a cylinder, and a shape capable of obtaining excellent light guiding efficiency is appropriately selected.

The long axis of the light guide part 3046 may be linear, and may be bent to such an extent that light is not prevented from advancing.

The lens 3200 constituting the photostimulated luminescence light optical system 3040 is fixed to the light inlet 3048 of the rotary structure 3018. An optical axis of the lens 3200 passes through the irradiation point P. Accordingly, the photostimulated luminescence light PL emitted from the irradiation point P is efficiently guided to the photodetector 1010, which improves the sensitivity of reading a radiological image.

### (Other items of rotary structure 3018)

A belt groove 3062 and a bearing groove 3078 similarly to the belt groove 1062 and the bearing groove 1078 according to the first preferred embodiment are formed on a side surface 3060 of the rotary structure 3018.

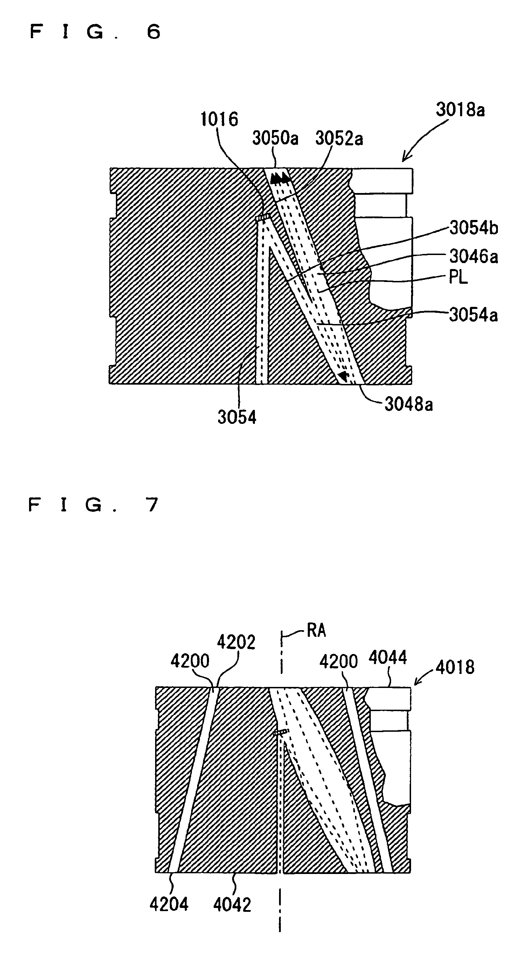

FIG. 6 is a schematic view of a rotary structure 3018a that is a modification of the rotary structure 3018 according to the third preferred embodiment shown in FIG. 5, which is a cross-sectional view of the rotary structure 3018a.

A basic structure of the rotary structure 3018a is similar to that of the rotary structure 3018, and thus only features thereof are described.

In the rotary structure 3018 of FIG. 5, the light guide part 3054 and the light guide part 3046 join each other at the confluence 3058, and the excitation light EL that has passed through the light guide part 3054 and been reflected by the rotating mirror 1016 passes through the light guide part 3046 to be guided to the scanning plane SP. On the other hand, in the rotary structure 3018a of FIG. 6, there is further provided a light guide part for excitation light EL passage 3054a that causes the excitation light EL that has been reflected by the rotating mirror 1016 to pass through toward the scanning plane SP. In addition, there is provided a light guide part for photostimulated luminescence light PL passage 3046a that guides the photostimulated luminescence light PL from the irradiation point P shown in FIG. 1 to the photodetector 1010, in place of the light guide part 3046 of the rotary structure 3018 of FIG. 5. Those are features of the rotary structure 3018a.

A surface 3052a of the light guide part 3046a is subjected to mirror finishing for efficiently reflecting the photostimulated luminescence light PL.

While the light guide part 3046a is hollow, as in the rotary structure 2018 according to the second preferred embodiment, a solid light guide part formed of translucent body may be formed in place of the hollow light guide part 3046a. This is similar to the light guide part 3046 of the rotary structure 3018 of FIG. 5.

A solid light guide part may be buried in part of the hollow light guide part 3046a.

The excitation light EL is reflected by the fixed mirror 1014 to pass through the light guide part 3054, and is reflected by the rotating mirror 1016 to pass through the light guide part 3054a, to be guided to the scanning plane SP.

The photostimulated luminescence light PL from the irradiation point P passes through the light guide part 3046a via the light inlet 3048a, and is guided to the photodetector 1010 via the light outlet 3050a.

A surface (which represents an inner surface of the hollow in the rotary structure 3018a according to the third preferred embodiment) 3052a of the light guide part 3046a forms a cylindrical surface of a cylinder having a linear long axis and a uniform cross-sectional shape, preferably, having a circular shape of a true circle. Strictly speaking, the surface 3052a forms a cylindrical inner surface inside the cylinder. That is, the light guide part 3046a is cylindrical in shape. Further, strictly speaking, the cylinder in this case has a shape obtained by obliquely cutting the top and bottom of the cylinder.

In the case where the solid light guide part is formed in place of the hollow light guide part 3046a, a lower surface of the rotary structure 3018 and the light inlet 3048a are not necessarily required to be configured to form the same surface, and an upper surface of the rotary structure 3018a and the light outlet 3050a are not necessarily required to be configured to form the same surface. For example, when the solid body having a shape of a true cylinder whose top and bottom are not obliquely cut is used in place of the hollow light guide part 3046a or used so as to be buried in part of the light guide part 3046a, processing thereof is made much easier.

While a whole of the light guide part 3054a and the light guide part 3046a may be formed of an integrated solid body of translucent body, a part thereof maybe formed of an integrated solid body of translucent body.

A surface (inner surface of a hollow) 3054b of the light guide part 3054a forms a cylindrical surface of a cylinder having a linear long axis and a uniform cross-sectional shape, preferably, having a circle shape of a true circle. Strictly speaking, the surface 3054b forms a cylindrical inner surface inside the cylinder.

The long axes of the light guide part 3046a and the light guide part 3054a may be linear, and may be bent to such an extent that light is not prevented from advancing.

The light guide part 3046a and the light guide part 3054a may join together in the middle inside the rotary structure 3018a, as shown in FIG. 6. Alternatively, the light guide part 3046a and the light guide part 3054a may be configured so as not to join together and have an independent path individually.

Inside the light guide part 3046a, the lens that collects the photostimulated luminescence light PL after the photostimulated luminescence light PL passes through the light inlet 3048a is omitted. In this case, a cross-section of the cylinder formed by the cylindrical inner surface 3052a is set to have an area approximately equal to that of the detecting surface of the detecting surface of the photodetector 1010 to approximately twice, and accordingly light can be guided efficiently.

In the case where the surface 3052a of the light guide part 3046a has a conical shape in which a cross-sectional shape in the light inlet 3048a is larger than a cross-sectional shape in the light outlet 3050a, the light guide part 3046a is conical in shape. Strictly speaking, the cone in this case has a shape obtained by obliquely cutting the top and bottom of the cone.

### (4 Fourth preferred embodiment)

A fourth preferred embodiment relates to a rotary structure 4018 that is employed in place of the rotary structure 1018 according to the first preferred embodiment.

FIG. 7 is a schematic view of the rotary structure 4018 according to the fourth preferred embodiment, which is a cross-sectional view of the rotary structure 4018.

As shown in FIG. 7, the rotary structure 4018 has a similar structure to that of the rotary structure 1018 according to the first preferred embodiment. Note that in the rotary structure 4018, an air communication hole 4200 is formed as a blower mechanism that guides air toward the scanning plane SP. The air communication hole 4200 has an air outlet 4204 on a lower surface 4042 of the rotary structure 4018 and an air inlet 4202 on an upper surface 4044 of the rotary structure 4018. The air outlet 4204 is farther from the rotation axis RA than the air inlet 4202. Accordingly, when the rotary structure 4018 rotates, air is sucked from the air inlet 4202, and the air passes through the air communication hole 4200 to be blown from the air outlet 4204. As a result, the imaging plate IP is pressed against the holding surface 1092, which prevents the imaging plate IP from becoming misaligned.

Note that an air communication hole similar to the air communication hole 4200 may be formed in the rotary structure 2018 according to the second preferred embodiment or the rotary structure 3018 according to the third preferred embodiment.

### (5 Fifth preferred embodiment)

A fifth preferred embodiment relates to a rotary structure 5018 that is employed in place of the rotary structure 1018 according to the first preferred embodiment.

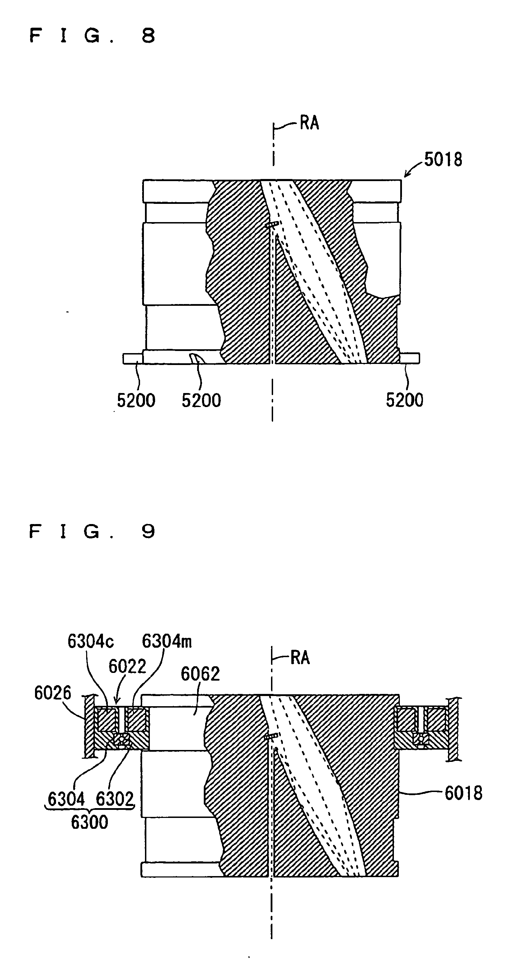

FIG. 8 is a schematic view of the rotary structure 5018 according to the fifth preferred embodiment, which is a cross-sectional view of the rotary structure 5018.

As shown in FIG. 8, the rotary structure 5018 has a similar structure to that of the rotary structure 1018 according to the first preferred embodiment. Note that a fan blade 5200 is formed as a blower mechanism that guides air toward the scanning plane SP in the rotary structure 5018. Accordingly, air is blown toward the scanning plane SP by the fan blade 5200 when the rotary structure 5018 rotates, whereby the imaging plate IP is pressed against the holding surface 1092, which prevents the imaging plate IP from becoming misaligned.

Note that a fan blade similar to the fan blade 5200 may be formed in the rotary structure 2018 according to the second preferred embodiment, the rotary structure 3018 according to the third preferred embodiment and the rotary structure 4018 according to the fourth preferred embodiment. Further, an air communication hole similar to the air communication hole 4200 according to the fourth preferred embodiment may be formed in the rotary structure 2018 according to the second preferred embodiment in which a fan blade is formed and the rotary structure 3018 according to the third preferred embodiment in which a fan blade is formed.

### (6 Sixth preferred embodiment)

A sixth preferred embodiment relates to a rotary structure 6018 and a rotation mechanism 6022 and a rotary structure 6018a and a rotation mechanism 6022a that are employed in place of the rotary structure 1018 and the rotation mechanism 1022 according to the first preferred embodiment.

FIG. 9 is a schematic view of the rotation mechanism 6022 and the rotary structure 6018 according to the sixth preferred embodiment, which is a cross-sectional view of the rotation mechanism 6022 and the rotary structure 6018.

As shown in FIG. 9, the rotary structure 6018 has a similar structure to that of the rotary structure 1018 according to the first preferred embodiment. Note that in place of the belt groove 1062, a rotor groove 6062 to which a hollow rotor 6302 of the rotation mechanism 6022 is fixed is formed in the rotary structure 6018. The width of the rotor groove 6062 is slightly larger than that of the hollow rotor 6302. The rotor groove 6062 extends in a circumferential direction of the rotary structure 6018.

The rotation mechanism 6022 includes a motor 6300. The motor 6300 includes the hollow rotor 6302 and a stator 6304.

The hollow rotor 6302 has a ring shape in which an axis hole having substantially the same shape as a cross-sectional shape of the rotary structure 6018 in cross section perpendicular to the rotation axis RA is formed. The rotary structure 6018 is inserted into the axis hole of the hollow rotor 6302, whereby the hollow rotor 6302 is fixed to the rotor groove 6062 of the rotary structure 6018. The hollow rotor 6302 includes a permanent magnet 6304m, which generates a magnetic field flux.

The stator 6304 is fixed to a frame 6026. The stator 6304 includes a coil 6304c that generates a rotational magnetic flux.

A rotational magnetic flux generating surface of the stator 6304 on which a rotational magnetic flux is generated and a magnetic field flux generating surface of the hollow rotor 6302 on which a magnetic field flux is generated are opposed to each other with a gap therebetween.

A bearing 6300 fixed to the stator 6304 pivotally supports the hollow rotor 6302 in a rotatable manner.

In the rotation mechanism 1022 according to the first preferred embodiment, the motor 1064 is not directly connected to the rotary structure 1018, and thus there is required a driving force transmission mechanism that transmits a driving force of the motor 1064 to the rotary structure 1018, such as the belt 1068. In contrast, in the rotation mechanism 6022 according to the sixth preferred embodiment, the motor 6300 is directly connected to the rotary structure 6018, and thus a driving force transmission mechanism that transmits a driving force of the motor 6300 to the rotary structure 6018 is omitted.

In place of the motor 6300 of rotational magnetic field type in which the hollow rotor 6302 generates a magnetic field flux and the stator 6304 generates a rotational magnetic field, there may be employed a motor of rotary armature type in which the stator 6304 generates a magnetic field flux and the hollow rotor 6302 generates a rotational magnetic flux. Note that the motor 6300 of rotational magnetic field type has an advantage that the reader 1002 is simplified because it is not required to feed power to the hollow rotor 6302 fixed to the rotary structure 6018.

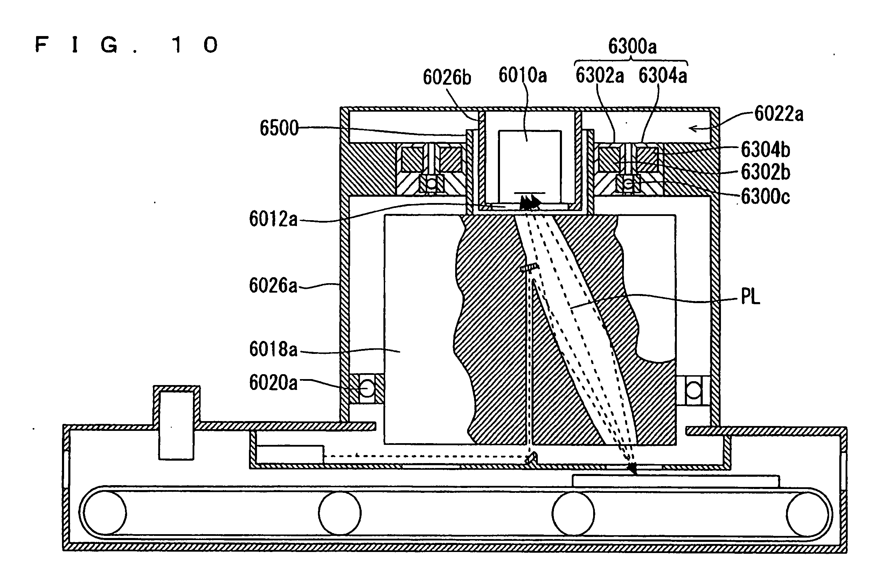

FIG. 10 is a schematic view of the rotation mechanism 6022a and the rotary structure 6018a according to the sixth preferred embodiment, which is a cross-sectional view of the rotation mechanism 6022a and the rotary structure 6018a.

Basic structures are similar to those of the rotation mechanism 6022 and the rotary structure 6018 of FIG. 9, and thus only features thereof are described.

As shown in FIG. 10, the rotary structure 6018a has a similar structure to that of the rotary structure 6018 of FIG. 9. Note that a rotor 6500 is fixed to the rotary structure 6018a, and the rotary structure 6018a is configured to rotate upon rotation of the rotor 6500.

The rotation mechanism 6022a includes a motor 6300a. The motor 6300a includes a hollow rotor 6302a and a stator 6304a.

The rotor 6500 is inserted into an axis hole of the hollow rotor 6302a and is fixed. The hollow rotor 6302a includes a permanent magnet 6302b and generates a magnetic field flux.

The stator 6304a is fixed to a frame 6026a. The stator 6304a includes a coil 6304b that generates a rotational magnetic flux.

A rotational magnetic flux generating surface of the stator 6304a on which a rotational magnetic flux is generated and a magnetic field flux generating surface of the hollow rotor 6302a on which a magnetic field flux is generated are opposed to each other with a gap therebetween. A bearing 6300c fixed to the stator 6304a pivotally supports the hollow rotor 6302a in a rotatable manner.

The rotor 6500 and the rotary structure 6018a are integrally rotated by driving of the motor 6300a.

There may be used a motor including a coil and a permanent magnet in the hollow rotor 6302a and the stator 6304a, respectively, in place of the motor 6300a including the permanent magnet 6302b and the coil 6304b in the hollow rotor 6302a and the stator 6304a, respectively.

In an upper portion of the frame 6026a, a photodetector support frame 6026b that supports a photodetector 6010a is fixed to a surface facing the top of the rotary structure 6018a with a gap therebetween. The photodetector 6010a is fixed to the photodetector support frame 6026b and faces the top center portion of the rotary structure 6018a with an optical filter 6012a being sandwiched therebetween, which receives the photostimulated luminescence light PL.

A bearing 6020a equivalent to the bearing 1020 according to the first preferred embodiment is fixed to the frame 6026a and supports a side surface of the rotary structure 6018a to pivotally support the rotary structure 6018a in a rotatable manner. The bearing 6300c pivotally supports the hollow rotor 6302a in a rotatable manner, and hence the bearing 6020a may be omitted.

In the preferred embodiment of FIG. 10, an outer diameter of the rotor 6500 can be made smaller than an outer diameter of the rotary structure 6018a, and thus an inner diameter of the hollow rotor 6302a can be made smaller. Therefore, it is possible to drive the motor 6300a at higher r.p.m. compared with the preferred embodiment of FIG. 9.

### (7 Seventh preferred embodiment)

A seventh preferred embodiment relates to a rotary structure 7018 and a rotation mechanism 7022 that are employed in place of the rotary structure 1018 and the rotation mechanism 1022 according to the first preferred embodiment.

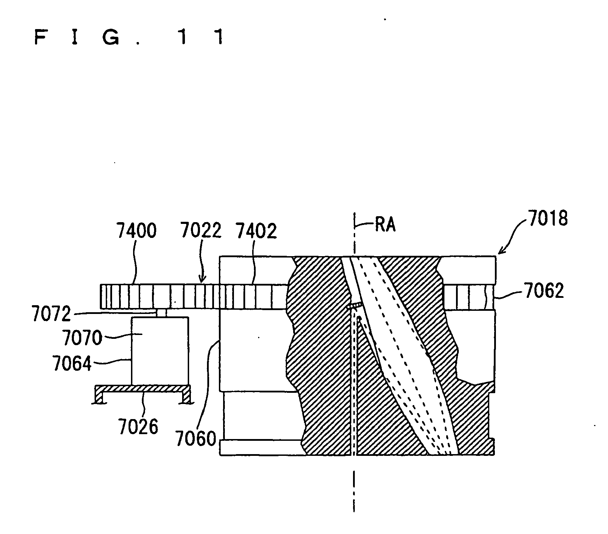

FIG. 11 is a schematic view of the rotary structure 7018 and the rotation mechanism 7022 according to the seventh preferred embodiment, which is a cross-sectional view of the rotary structure 7018 and the rotation mechanism 7022.

As shown in FIG. 11, the rotary structure 7018 has a similar structure to that of the rotary structure 1018 according to the first preferred embodiment. Note that in place of the belt groove 1062, a gear groove 7062 is formed in the rotary structure 7018. The gear groove 7062 has a width slightly larger than that of the gear 7402 of the rotation mechanism 7022 and extends in a circumferential direction of the rotary structure 7018.

The rotation mechanism 7022 includes a motor 7064 that generates a driving force of rotation and gears 7400 and 7402 that adjust a ratio of rotation and transmit a driving force of the motor 7064 to the rotary structure 7018.

A motor-housing 7070 of the motor 7064 is fixed to the frame 7026. The gear 7400 is fixed to a shaft 7072 of the motor 7064. The gear 7402 has a ring shape in which an axis hole having substantially the same shape as the cross-sectional shape of the rotary structure 7018 in cross section perpendicular to the rotation axis RA is formed. The rotary structure 7018 is inserted into the axis hole of the gear 7402, and the gear 7402 is fixed to the gear groove 7062 of the rotary structure 7018. The gear 7400 and the gear 7402 are meshed with each other. In the case where a side surface 7060 of the rotary structure 7018 is resistant to abrasion, in place of mounting the gear 7402 to the side surface 7060 of the rotary structure 7018, part of the side surface 7060 of the rotary structure 7018 may be caused to have a gear shape. Alternatively, a roller may be fixed to the shaft 7072 of the motor 7064 in place of the gear 7400, and a roller surface may abut against the side surface 7060 of the rotary structure 7018.

### (8 Eighth preferred embodiment)

An eighth preferred embodiment relates to a reading mechanism 8007 that is employed in place of the reading mechanism 1007 according to the first preferred embodiment.

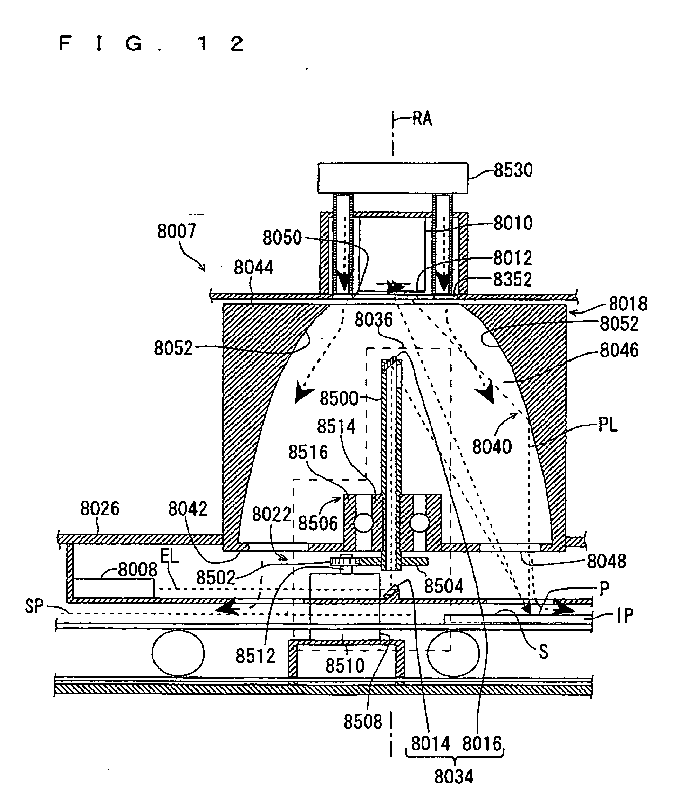

FIG. 12 is a schematic view of the reading mechanism 8007 according to the eighth preferred embodiment, which is a cross-sectional view of the reading mechanism 8007.

As shown in FIG. 12, the reading mechanism 8007 includes an excitation light source 8008 that emits the excitation light EL, a photodetector 8010 that detects the photostimulated luminescence light PL, an optical filter 8012 that prevents the excitation light EL from entering the photodetector 8010, a fixed mirror 8014 that bends the excitation light EL that has arrived from the horizontal direction toward the direction in which the rotation axis RA extends, a rotating mirror 8016 that bends the excitation light EL that has arrived from the direction in which the rotation axis RA extends toward the direction inclined with respect to the rotation axis RA, a fixed structure 8018 that guides the photostimulated luminescence light PL emitted from the irradiation point P to the photodetector 8010, and a rotation mechanism 8022 that causes the rotating mirror 8016 to rotate around the rotation axis RA.

### (Scanning mechanism 8036)

A scanning mechanism 8036 that is part of the reading mechanism 8007 and causes the irradiation point P to circularly move includes an excitation light optical system 8034 and the rotation mechanism 8022. The excitation light optical system 8034 includes the fixed mirror 8014 and the rotating mirror 8016 and guides the excitation light EL toward the irradiation point P apart from the rotation axis RA. The rotation mechanism 8022 causes the rotating mirror 8016 constituting part of the excitation light optical system 8034 to rotate around the rotation axis RA. Owing to the scanning mechanism 8036, the distance from the excitation light source 8008 to the irradiation point P is maintained constant, and the angle of incidence of the excitation light EL with respect to the radiological image forming surface S is maintained constant, with the result that radiological images are read in a uniform manner.

### (Excitation light optical system 8034)

The excitation light optical system 8034 may include optical elements other than the fixed mirror 8014 and the rotating mirror 8016. For example, the excitation light optical system 8034 may include, for example, a mirror that bends the excitation light EL further and a lens that converges the excitation light EL. For example, a prism may be used as a bending optical element that bends the excitation light EL, in place of the mirror.

### (Rotating mirror 8016)

The rotating mirror 8016 bends the excitation light EL that has arrived from the direction in which the rotation axis RA extends toward the direction inclined with respect to the rotation axis RA. The excitation light EL that has bent by the rotating mirror 8016 is guided to the irradiation point P apart from the rotation axis RA.

The rotating mirror 8016 is provided on the rotation axis RA. The rotating mirror 8016 is fixed to an upper end of a rotating tubular body 8500 of the rotation mechanism 8022 inside the fixed structure 8018. Owing to the rotating mirror 8016, the optical path of the excitation light EL is not required to be rotated before reaching the rotating mirror 8016, and thus the excitation light source 8008 needs not to be moved, which facilitates power feeding to the excitation light source 8008.

The rotating mirror 8016 fixed to the rotating tubular body 8500 rotates around the rotation axis RA, whereby an optical path of the excitation light EL ranging from the rotating mirror 8016 to the scanning plane SP rotates around the rotation axis RA, and the irradiation point P circularly moves on the scanning plane SP.

A reflecting surface of the rotating mirror 8016 is tilted with respect to the horizontal direction similarly to the rotating mirror 1016 according to the first preferred embodiment.

### (Fixed mirror 8014)

The fixed mirror 8014 bends the excitation light EL that has arrived from the horizontal direction toward the direction in which the rotation axis RA extends and guides the bent light to the rotating mirror 8016. The direction of the excitation light EL that reaches the fixed mirror 8014 is not required to be horizontal, and is only required to be the direction inclined with respect to the direction in which the rotation axis RA extends. The excitation light source 8008 is made apart from the rotation axis RA thanks to the fixed mirror 8014, and thus power feeding to the excitation light source 8008 is facilitated, which increases a degree of freedom in structure of the reading mechanism 8007.

The fixed mirror 8014 is provided on the rotation axis RA. The fixed mirror 8014 is fixed to the frame 8026 separately from the rotation mechanism 8022 outside the rotary structure 8018. As a result, the excitation light EL is guided to the fixed mirror 8014 without being interfered by the rotary structure 8018.

The fixed mirror 8014 is preferably fixed at a position between a lower surface 8042 of the fixed structure 8018 and the scanning plane SP. Accordingly, the photodetector 8010 and the fixed mirror 8014 are separated from each other by the fixed structure 8018, which prevents the stray light of the excitation light EL from entering the photodetector 8010. Further, the excitation light EL is not interrupted by the imaging plate IP.

A reflecting surface of the fixed mirror 8014 is inclined with respect to the horizontal direction similarly to the fixed mirror 1014 according to the first preferred embodiment.

### (Excitation light source 8008, photodetector 8010 and optical filter 8012)

Those similar to the excitation light source 1008, the photodetector 1010 and the optical filter 1012 according to the first preferred embodiment are employed as the excitation light source 8008, the photodetector 8010 and the optical filter 8012.

### (Photostimulated luminescence light optical system 8040)

The photostimulated luminescence light optical system 8040 that guides the photostimulated luminescence light PL emitted from the irradiation point P on the scanning plane SP to the photodetector 8010 is part of the fixed structure 8018.

### (Fixed structure 8018)

An outer shape of the fixed structure 8018 is approximately cylindrical. A cylinder axis of the fixed structure 8018 is positioned at the same position as the rotation axis RA.

The fixed structure 8018 is provided between the photodetector 8010 and the scanning plane SP. The lower surface 8042 of the fixed structure 8018 is opposed to the scanning plane SP and is parallel to the scanning plane SP. The upper surface 8044 of the fixed structure 8018 is opposed to the photodetector 8010. The fixed structure 8018 is fixed to the frame 8026 separately from the rotation mechanism 8022.

The fixed structure 8018 is a hollow body in which a hollow light guide part 8046 that guides the photostimulated luminescence light PL from the irradiation point P to the photodetector 8010 is formed. The light guide part 8046 has a light inlet 8048 for the photostimulated luminescence light PL on the lower surface 8042 of the fixed structure 8018 that is opposed to the scanning plane SP and a light outlet 8050 for the photostimulated luminescence light PL on the upper surface 8044 of the fixed structure 8018 that is opposed to the photodetector 8010. The light guide part 8046 has a bell shape in which the distance between the rotation axis RA and a surface (which represents an inner surface of the hollow in the fixed structure 8018 according to the eighth preferred embodiment) 8052 increases from the upper surface 8044 to the lower surface 8042 of the fixed structure 8018. The surface 8052 of the light guide part 8046 has rotation symmetry of the rotation axis RA. Accordingly, the photostimulated luminescence light PL emitted from the irradiation point P that circularly moves is guided to the photodetector 8010 even when the fixed structure 8018 is not rotated. The surface 8052 of the light guide part 8046 serves as a concave reflecting mirror that collects the photostimulated luminescence light PL entering from the light inlet 8048 to the light outlet 8050.

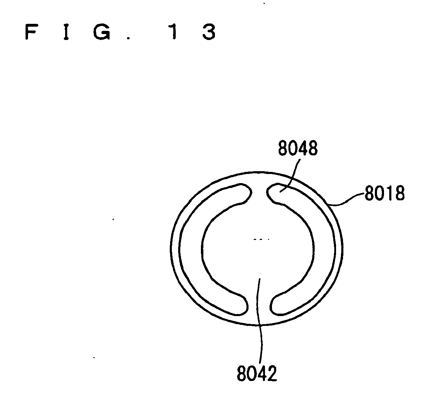

FIG. 13 is a bottom view of the fixed structure 8018.

As shown in FIG. 13, in the lower surface 8042 of the fixed structure 8018, the light inlet 8048 that is interrupted at two spots and has an incomplete circular shape is formed. Two interrupted spots are provided at locations where the optical path of the excitation light EL during scanning of the radiological image forming surface S is not shielded.

### (Rotation mechanism 8022)

The rotation mechanism 8022 includes a motor 8508 that generates a driving force of rotation, gears 8502 and 8504 that adjust a ratio of rotation and transmit a driving force of the motor 8508 to the rotating tubular body 8500, a bearing 8506 that supports the rotating tubular body 8500, and the rotating tubular body 8500 that supports the rotating mirror 8016.

A motor-housing 8510 of the motor 8508 is fixed to the frame 8026. The gear 8502 is fixed to a shaft 8512 of the motor 8508. An axis hole having substantially the same shape as the cross-sectional shape of the rotating tubular body 8500 in cross section perpendicular to the rotation axis RA is formed in the gear 8504. The rotating tubular body 8500 is inserted into the axis hole of the gear 8504, and the gear 8504 is connected to the rotating tubular body 8500. The gear 8502 and the gear 8504 are meshed with each other.

The bearing 8506 supports the rotating tubular body 8500 in the state where the rotating tubular body 8500 is capable of rotating around the rotation axis RA. An outer ring 8516 of the bearing 8506 is fixed to the inner bottom surface of the light guide part 8046 of the fixed structure 8018, and an inner ring 8514 of the bearing 8506 is fixed to the rotating tubular body 8500.

While FIG. 12 shows the case where the bearing 8506 is a roller bearing, the rotating tubular body 8500 may be supported by a sliding bearing or a fluid dynamic bearing.

The rotation mechanism 8022 rotates the rotating tubular body 8500 around the rotation axis RA.

The rotating tubular body 8500 extends in the rotation axis RA direction. The rotating tubular body 8500 is provided on the rotation axis RA.

### (Optical path of excitation light EL)

The excitation light EL emitted from the excitation light source 8008 is reflected by the fixed mirror 8014 and enters a lower end of the rotating tubular body 8500. The excitation light EL that has entered the lower end of the rotating tubular body 8500 is emitted from the upper end of the rotating tubular body 8500, is reflected by the rotating mirror 8016, and is guided to the scanning plane SP.

### (Blower mechanism 8530 and dust-proof filter 8352)

In the case where the reading mechanism 8007 according to the eighth preferred embodiment is employed, desirably, a blower mechanism 8530 that generates an air stream and a dust-proof filter 8352 that removes dust from the air stream are provided. The air stream generated by the blower mechanism 8530 flows into the light guide part 8046 via the dust-proof filter 8352, is guided, and is finally blown toward the scanning plane SP from the light inlet 8048. Accordingly, the imaging plate IP is pressed against the holding surface 1092, which prevents the imaging plate IP from becoming misaligned.

### (9 Ninth preferred embodiment)

A ninth preferred embodiment relates to a transport mechanism 9006 that is employed in place of the transport mechanism 1006 according to the first preferred embodiment.

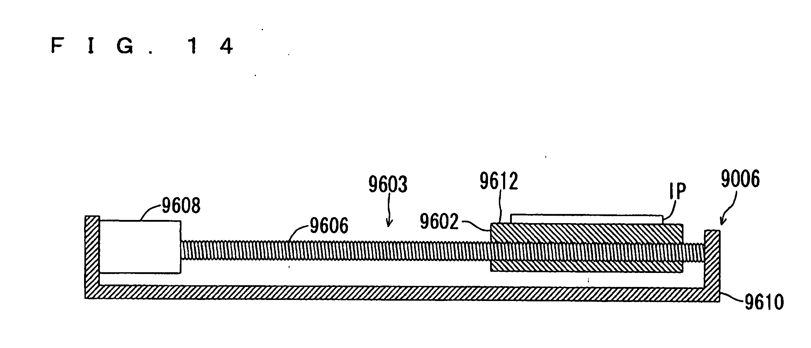

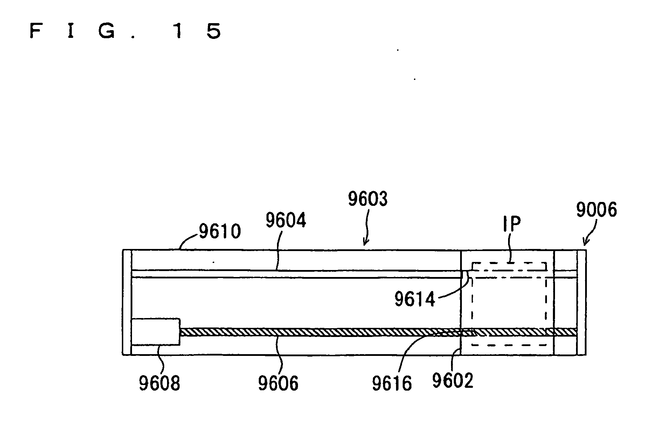

FIGS. 14 and 15 are schematic views of the transport mechanism 9006 according to the ninth preferred embodiment. FIG. 14 is a cross-sectional view of the transport mechanism 9006, and FIG. 15 is a top view of the transport mechanism 9006.

As shown in FIGS. 14 and 15, the transport mechanism 9006 includes a stage (holding part) 9602 that holds the imaging plate IP in a flat manner and a stage drive mechanism 9603 that causes the stage 9602 to reciprocate. The stage drive mechanism 9603 includes a guide rod 9604 that guides the stage 9602 toward the transport direction, a ball screw 9606 that sends the stage 9602 toward the transport direction, a motor 9608 that rotates the ball screw 9606, and a frame 9610 that supports those described above.

The stage 9602 has a flat holding surface 9612 larger than the imaging plate IP.

In the stage 9602, a guide rod hole 9614 that has a hole shape whose diameter is slightly larger than that of a cross-sectional shape of the guide rod 9604 in cross section perpendicular to the transport direction. The guide rod 9604 is inserted into the guide rod hole 9614. The stage 9602 slides with respect to the guide rod 9604. Accordingly, the stage 9602 is guided in the transport direction.

A screw hole 9616 corresponding to a screw shape of the ball screw 9606 is formed in the stage 9602. The ball screw 9606 is screwed with the screw hole 9616.

The guide rod 9604 and the ball screw 9606 extend in the transport direction. Both ends of the guide rod 9604 are fixed to the frame 9610. One end of the ball screw 9606 is supported by the frame 9610 in a rotatable manner, and the other end of the ball screw 9606 is connected to a rotor of the motor 9608. A motor-housing of the motor 9608 is fixed to the frame 9610.

When the motor 9608 rotates the ball screw 9606, the stage 9602 linearly moves relative to the fixed scanning mechanism 1036. Accordingly, the imaging plate IP is transported in the direction perpendicular to the rotation axis RA.

The transport mechanism 9006 is an example of a relative movement mechanism that causes the holder formed of the holding surface 9612 to move relative to the scanning mechanism in the direction perpendicular to the rotation axis RA.

### (10 Tenth preferred embodiment)

A tenth preferred embodiment relates to a transport mechanism 10006 that is employed in place of the transport mechanism 1006 according to the first preferred embodiment.

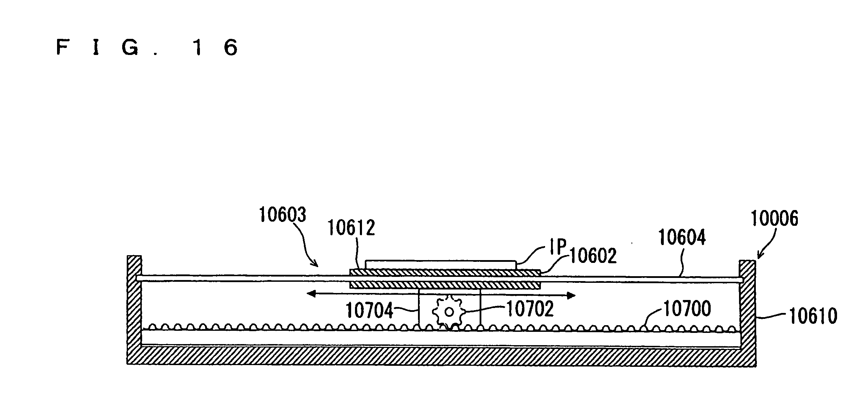

FIG. 16 is a schematic view of the transport mechanism 10006 according to the tenth preferred embodiment, which is a cross-sectional view of the transport mechanism 10006.

As shown in FIG. 16, the transport mechanism 10006 includes a stage (holding part) 10602 that holds the imaging plate IP in a flat manner and a stage drive mechanism 10603 that causes the stage 10602 to reciprocate. The stage drive mechanism 10603 includes a guide rod 10604 that guides the stage 10602 toward the transport direction, a rack 10700 and a pinion 10702 that send the stage 10602 toward the transport direction, a motor 10704 that rotates the pinion 10702, and a frame 10610 that supports those described above.

The stage 10602 has a flat holding surface 10612 larger than the imaging plate IP.

The guide rod 10604 and the rack 10700 extend in the transport direction. Both ends of the guide rod 10604 and the rack 10700 are fixed to the frame 10610. The pinion 10702 is connected to a shaft of the motor 10704. A motor-housing of the motor 10704 is fixed to a lower surface of the stage 10602. The rack 10700 and the pinion 10702 are meshed with each other. When the motor 10704 rotates the pinion 10702, the stage 10602 linearly moves relative to the fixed scanning mechanism 1036. Accordingly, the imaging plate IP is linearly transported toward the direction perpendicular to the rotation axis RA.

Even when the rack 10700 is omitted and a roller whose roller surface abuts against a bottom upper surface and the like of the frame 10610 is connected to the shaft of the motor 10704 in place of the pinion 10702, the stage 10602 moves relative to the fixed scanning mechanism 1036 in a similar manner, and the imaging plate IP is linearly transported toward the direction perpendicular to the rotation axis RA.

The stage drive mechanism 10603 is an example of a relative movement mechanism that moves the holder formed of the stage 10602 to move relative to the scanning mechanism in the direction perpendicular to the rotation axis RA.

### (11 Eleventh preferred embodiment)

An eleventh preferred embodiment relates to an arrangement of imaging plates IP1 to IP4 that are employed in place of an arrangement of the imaging plate IP according to the first preferred embodiment.

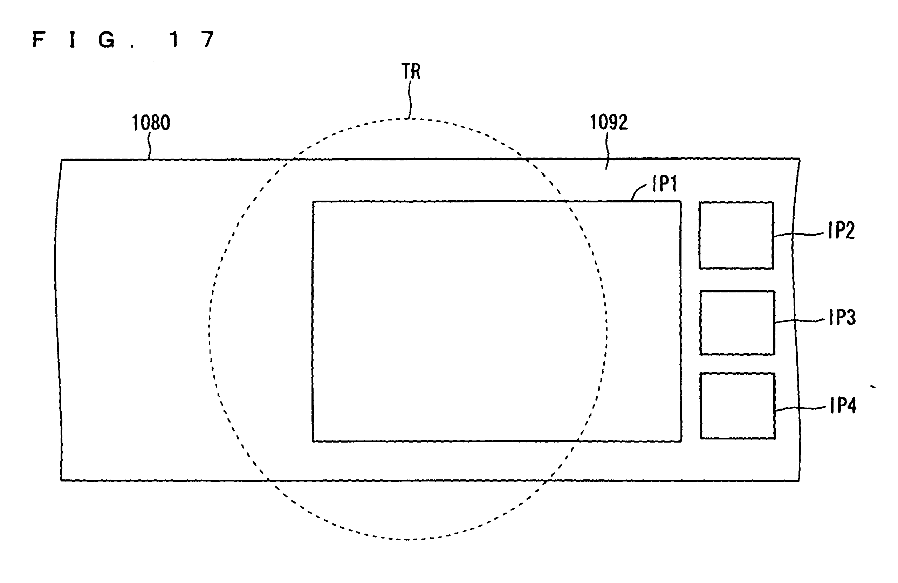

FIG. 17 is a schematic view showing an arrangement of the imaging plates IP1 to IP4 according to the eleventh preferred embodiment, which is a top view showing the arrangement of the imaging plates IP1 to IP4 in transportation.

As shown in FIG. 17, on the holding surface 1092 of the belt 1080, the large imaging plate IP1 for panoramic radiography is placed, and three small imaging plates IP2 to IP4 for oral radiography are placed by being arranged in the direction perpendicular to the transport direction. As described above, it is acceptable to place the imaging plates IP1 to IP4 of different sizes together or to arrange a plurality of imaging plates IP1 to IP4 in the transport direction and the direction perpendicular to the transport direction.

Note that in the case where a plurality of imaging plates IP2 to IP4 are arranged in the direction perpendicular to the transport direction, a diameter of the track TR is determined such that the entire radiological image forming surfaces of the arranged plurality of imaging plates IP2 to IP4 are scanned.

### (12 Twelfth preferred embodiment)

A twelfth preferred embodiment relates to a radiological image reader 12002 that reads a radiological image from the radiological image forming surface S of the imaging plate IP. A main difference between the reader 1002 according to the first preferred embodiment and the radiological image reader 12002 according to the twelfth preferred embodiment resides in that the holder (belt 1080) is moved relative to the fixed reading mechanism 1007 in the reader 1002 according to the first preferred embodiment, whereas a reading mechanism 12007 is moved relative to a fixed holder (tray 12080) in the reader 12002 according to the twelfth preferred embodiment. By focusing attention on this difference, the reader 12002 according to the twelfth preferred embodiment is described.

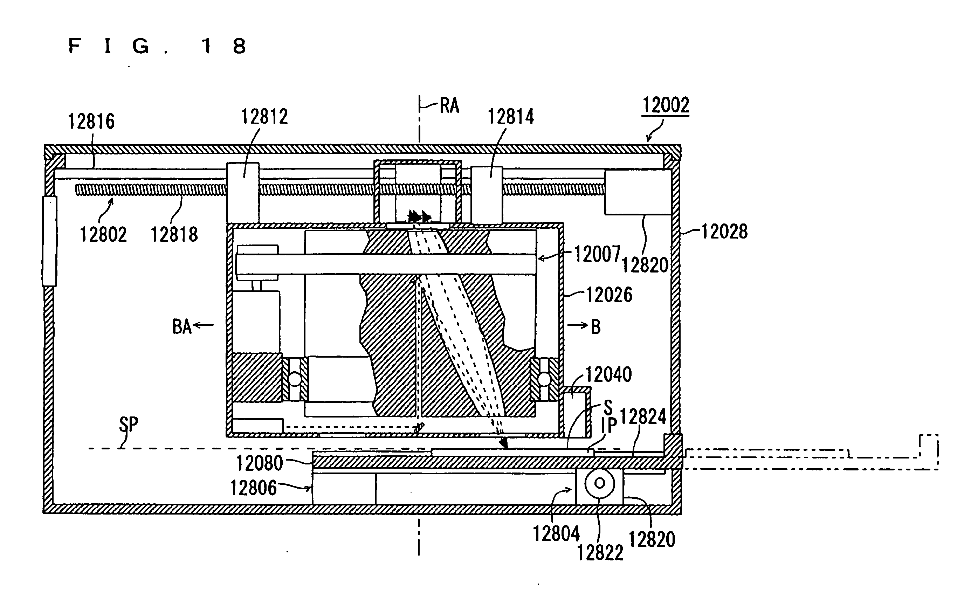

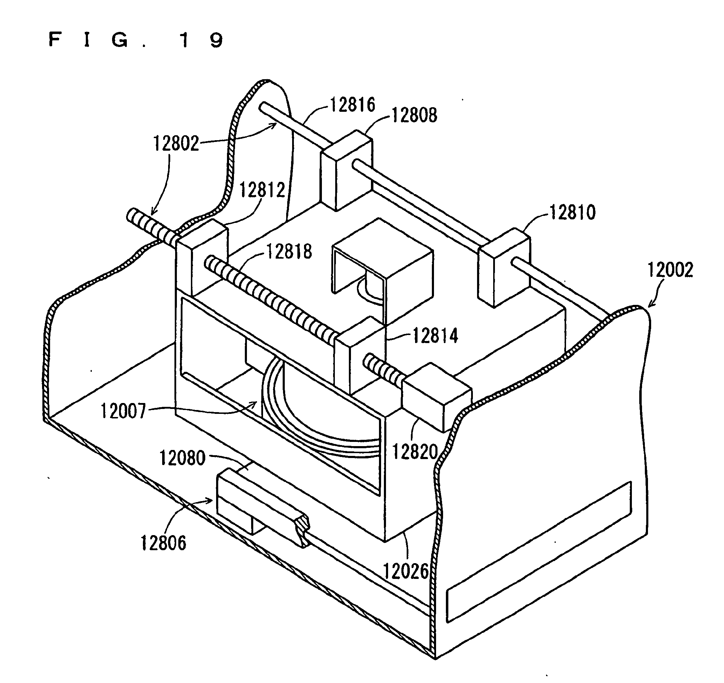

FIGS. 18 and 19 are schematic views of the reader. FIG. 18 is a cross-sectional view of the reader, and FIG. 19 is a perspective view of the reader.

As shown in FIGS. 18 and 19, the reader 12002 includes the reading mechanism 12007 that reads a radiological image from the radiological image forming surface S, the tray 12080 that holds the imaging plate IP, an erase beam light source 12040 that emits an erase beam, a frame 12026 that accommodates the reading mechanism 12007 and the erase beam light source 12040, a frame drive mechanism 12802 that causes the reading mechanism 12007 and the erase beam light source 12040 to reciprocate together with the frame 12026, a tray drive mechanism 12804 that causes the tray 12080 to reciprocate, and a housing 12028 that accommodates those described above.

The imaging plate IP, which has been carried into the reader 12002 by a carrying-in/out mechanism 12806 including the tray 12080 and the tray drive mechanism 12804, is held by the tray 12080 in a flat manner. The tray 12080 is a holder that holds the imaging plate IP. The reading mechanism 12007 is transported toward a direction B or BA, and passes above the imaging plate IP held by the tray 12080, to thereby read a radiological image drawn on the radiological image forming surface S.

The reading mechanism 12007 is similar to the reading mechanism 1007 according to the first preferred embodiment except for that the components, which are equivalent to the components fixed to the frame 1026 that does not move in the reading mechanism 1007 according to the first preferred embodiment, are fixed to the frame 12026 that moves. The reader mechanism 12007 includes a scanning mechanism that causes the irradiation point P to circularly move.

The frame drive mechanism 12802 includes support pieces 12808, 12810, 12812 and 12814 that support the frame 12026, a guide rod 12816 that guides the support pieces 12808 and 12810 toward the drive direction, a ball screw 12818 that sends the support pieces 12812 and 12814 toward the drive direction, and a motor 12820 that rotates the ball screw 12818.

Formed in the support pieces 12808 and 12810 are guide rod holes having substantially the same hole shape as a cross-sectional shape of the guide rod 12816 in cross section perpendicular to the drive direction. The guide rod 12816 is inserted into the guide rod holes. The support pieces 12808 and 12810 are fixed to the frame 12026 and slide with respect to the guide rod 12816. Accordingly, the frame 12026 and the reading mechanism 12007 and the erase beam light source 12040 that are fixed to the frame 12026 are guided in the drive direction.

Formed in the support pieces 12812 and 12814 are screw holes corresponding to the screw shape of the ball screw 12818. The ball screw 12818 is screwed with the screw holes.

The guide rod 12816 and the ball screw 12818 extend in the drive direction. Both ends of the guide rod 12816 are fixed to the housing 12028. While the support structure thereof is not specifically described, one end of the ball screw 12818 is supported by the housing 12028 in a rotatable manner, and the other end of the ball screw 12818 is connected to a rotor of the motor 12028. The motor-housing of the motor 12820 is fixed to the housing 12028.

When the motor 12820 rotates the ball screw 12818, the frame 12026 and the reading mechanism 12007 and the erase beam light source 12040 that are fixed to the frame 12026 linearly move relative to the fixed tray 12080. As a result, the reading mechanism 12007 and the erase beam light source 12040 are linearly transported in the direction perpendicular to the rotation axis RA.

The tray drive mechanism 12804 includes a roller 12822 that sends the tray 12080 in the drive direction and the motor 12820 that rotates the roller 12822.

A roller surface of the roller 12822 abuts against a bottom surface of the tray 12080. The roller 12822 is connected to a shaft of the motor 12820. A motor-housing of the motor 12820 is fixed to the housing 12028.

When the motor 12820 rotates the roller 12822, the tray 12080 moves between an ejection position at which the tray 12080 is drawn from the housing 12028 and a loading position at which the tray 12080 is pushed into the housing 12028. When the tray 12080 is at the ejection point, the imaging plate IP is placed on a holding surface 12824 of the tray 12080, and the imaging plate IP placed on the holding surface 12824 of the tray 12080 is collected. When the tray 12080 is at the loading position, a radiological image drawn on the radiological image forming surface S of the imaging plate IP placed on the holding surface 12824 of the tray 12080 is read by the reading mechanism 12007.

The erase beam light source 12040 is fixed to the frame 12026 and moves together with the reading mechanism 12007 along the drive direction by driving of the frame drive mechanism 12802, to thereby perform erasing.

In the state where the tray 12080 is at the loading position and the imaging plate IP is carried into the reader 12002, the tray 12080 and the imaging plate IP are fixed with respect to the housing 12028 and the reader 12002 main body.

The scanning mechanism equivalent to the scanning mechanism 1036 according to the first preferred embodiment is also part of the reading mechanism 12007, and thus the scanning mechanism constituting the reading mechanism 12007 is also moved relative to the tray 12080 fixed to the housing 12028 and the reader 12002 main body at the loading position. The excitation light source is part of the reading mechanism 12007 as well, and thus the scanning mechanism and the excitation light source constituting the reading mechanism 12007 are integrally moved.

The frame drive mechanism 12802 is an example of a relative movement mechanism that causes the holder formed of the tray 12080 to move in the direction perpendicular to the rotation axis RA relative to the scanning mechanism constituting the reading mechanism 12007.

### (13 Thirteenth preferred embodiment)

A thirteenth preferred embodiment relates to a radiological image reader 13002 that reads a radiological image from the radiological image forming surface S of the imaging plate IP. A main difference between the reader 1002 according to the first preferred embodiment and the radiological image reader 13002 according to the thirteenth preferred embodiment resides in that the reader 1002 according to the first preferred embodiment causes the holder (belt 1080) to move relative to the fixed reading mechanism 1007, whereas the reader 13002 according to the thirteenth preferred embodiment causes the holder (belt 13080) and the reading mechanism 13007 to move. The reader 13002 according to the thirteenth preferred embodiment is described below particularly by focusing attention on this difference.

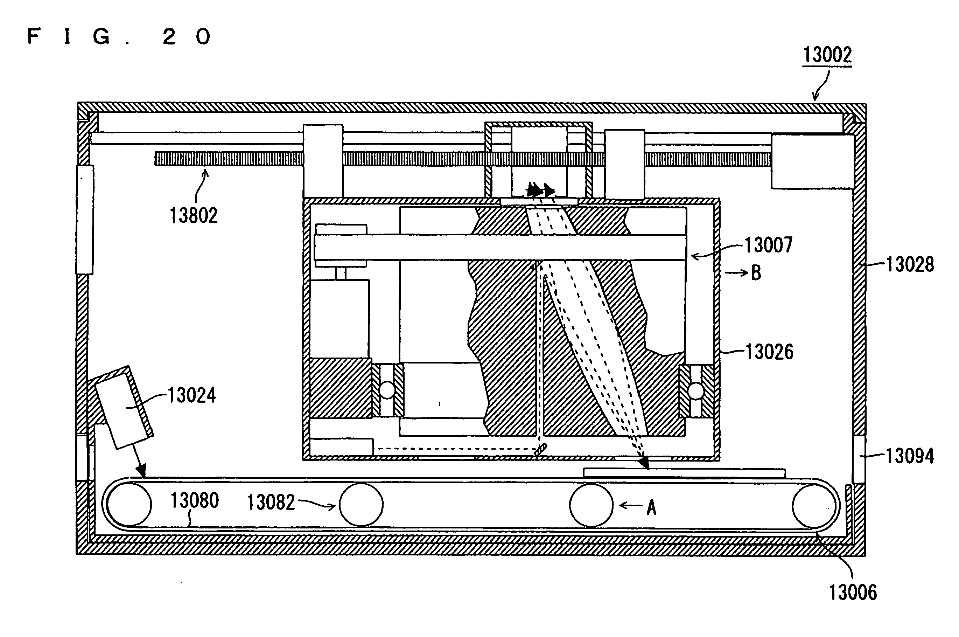

FIG. 20 is a schematic view of the reader 13002, which is a cross-sectional view of the reader 13002.

As shown in FIG. 20, the reader 13002 includes the reading mechanism 13007 that reads a radiological image from the radiological image forming surface S, the belt 13080 that holds the imaging plate IP, a belt drive mechanism 13082 that causes the belt 13080 to go therearound, an erase beam light source 13024 that emits an erase beam, a frame 13026 that accommodates the reading mechanism 13007, a frame drive mechanism 13802 that causes the reading mechanism 13007 to reciprocate together with the frame 13026, and a housing 13028 that accommodates those described above. A transport mechanism 13006 according to the thirteenth preferred embodiment that includes the belt 13080 and the belt drive mechanism 13082 is similar to the transport mechanism 1006 according to the first preferred embodiment, which includes a scanning mechanism that causes the irradiation point P to circularly move.

The imaging plate IP that is inserted into an inlet 13094 formed in the housing 1028 and is carried into the reader 12002 is held at an outgoing portion of the belt 13080. The imaging plate IP held at the outgoing portion of the belt 13080 is transported toward a direction A. The reading mechanism 13007 is transported toward a direction B. The imaging plate IP held by the belt 13080 and the reading mechanism 13007 cross each other within the reader 13002, and the reading mechanism 13007 reads a radiological image drawn on the radiological image forming surface S.

### (Outline of reading mechanism 13007)

The reading mechanism 13007 is similar to the reading mechanism 1007 according to the first preferred embodiment except for that the components, which are equivalent to the components fixed to the frame 1026 that does not move in the reading mechanism 1007 according to the first preferred embodiment, are fixed to the frame 13026 that moves.

The frame drive mechanism 13802 according to the thirteenth preferred embodiment is similar to the frame drive mechanism 12802 according to the twelfth preferred embodiment.

A holding surface of the imaging plate IP that is part of the belt 13080 is a component of the transport mechanism 13006 that transports the imaging plate IP and is also a holder that holds the imaging plate IP.

A holding surface of the belt 13080 moves in the direction perpendicular to the rotation axis RA with respect to the scanning mechanism of the reading mechanism 13007, and the imaging plate IP placed on the holding surface is linearly transported in the direction perpendicular to the rotation axis RA with respect to the scanning mechanism of the reading mechanism 13007. The imaging plate IP is linearly moved relative to the scanning mechanism of the reading mechanism 13007.

Owing to driving of the frame drive mechanism 13802, the reading mechanism 13007 linearly moves relative to the belt 13080. Accordingly, the reading mechanism 13007 is linearly transported in the direction perpendicular to the rotation axis RA.

The scanning mechanism equivalent to the scanning mechanism 1036 according to the first preferred embodiment is also part of the reading mechanism 13007, and thus the scanning mechanism constituting the reading mechanism 13007 is also moved relative to the holding surface of the belt 13080.

The direction in which the reading mechanism 13007 moves by driving of the frame drive mechanism 13802 and the direction in which the holding surface of the belt 13080 moves by driving of the transport mechanism 13006 are opposite to each other.

The transport mechanism 13006 and the frame drive mechanism 13802 are examples of a relative movement mechanism that causes the holder formed of the holding surface of the belt 13080 to move in the direction perpendicular to the rotation axis RA relative to the scanning mechanism of the reading mechanism 13007.

According to the reader 1002 of the first preferred embodiment that causes the holder (belt 1080) to move relative to the fixed reading mechanism 1007, if the configuration is made such that the reading mechanism 1007 is transported for scanning after the imaging plate IP is placed on the belt 1080 and that the imaging plate IP that has undergone scanning is sent in the state of being placed on the belt 1080, the space for placing the imaging plate IP is required in front of and behind the reading mechanism 1007, leading to an increase in size of the belt 1080 by that amount. In contrast, according to the reader 13002 of this preferred embodiment employing the configuration of the reader 12002 according to the twelfth preferred embodiment that causes the reading mechanism 12007 to move relative to the fixed holder (tray 12080), the reading mechanism 13007 moves as well, and thus the imaging plate IP can be placed on the belt 13080 by retracting the reading mechanism 13007 in advance. As a result, the belt 13080 and the reading mechanism 13007 can be moved and the scanning can be performed, leading to a reduction in space on the belt 13080 side by that amount. That is, a footprint does not extremely increase. The reader 13002 according to the thirteenth preferred embodiment that moves the holder (belt 13080) and the reading mechanism 13007 is capable of making a footprint particularly small by taking advantages of those.

### (14 Others)

While the invention has been shown and described in detail, the foregoing description is in all aspects illustrative and not restrictive. It is therefore understood that numerous modifications and variations can be devised without departing from the scope of the invention. In particular, it is naturally intended that items described in the first to thirteenth preferred embodiments are combined. In addition, it is also intended that the modified preferred embodiments according to the second to tenth preferred embodiments are employed in the reader 12002 according to the twelfth preferred embodiment or the reader 13002 according to the thirteenth preferred embodiment.

## Claims

1. A radiological image reader (1002, 12002, 13002) for reading a radiological image from a medium (IP, IP1, IP2, IP3, IP4) having a radiological image forming surface (S) including a photostimulable phosphor,
comprising:
a holder (1080, 9602, 10602, 12080. 13080) holding the medium (IP, IP1, IP2, IP3, IP4) in a flat manner;
a light source (1008, 8008) for emitting excitation light (EL);
a scanning mechanism (1036, 8036) for causing an optical path of the excitation light (EL) emitted from said light source (1008, 8008) to rotate around a rotation axis (RA) being perpendicular to a scanning plane (SP) including the radiological image forming surface (S) of the medium (IP, IP1, IP2, IP3, IP4) held by said holder (1080, 9602, 10602, 12080, 13080) and being apart from said light source (1008, 8008), and for causing an irradiation point (P) at which the excitation light (EL) emitted from said light source (1008, 8008) is irradiated to circularly move on said scanning plane (SP);
a photodetector (1010, 6010a, 8010) for detecting photostimulated luminescence light (PL) emitted from said irradiation point (P); and
a photostimulated luminescence light optical system (1040, 2040, 3040, 8040) for guiding the photostimulated luminescence light (PL) emitted from the irradiation point (P) to said photodetector (1010, 6010a, 8010);
a relative movement mechanism (1006, 9006, 10006, 12802) for causing said holder (1080, 9602, 10602, 12080, 13080) to move in a direction perpendicular to said rotation axis (RA), relative to said scanning mechanism (1036, 8036);
wherein said scanning mechanism (1036, 8036) comprises:
an excitation light optical system (1034, 8034) for guiding the excitation light (EL) to the irradiation point (P) apart from said rotation axis (RA); and
a rotation mechanism (1022, 6022, 6022a, 7022, 8022) for causing at least part of said excitation light optical system (1034, 8034) to rotate around said rotation axis (RA), and
wherein said photodetector (1010, 6010a, 8010) is provided on said rotation axis (RA);
**characterized in**
**that** said photostimulated luminescence light optical system (1040, 2040, 3040. 8040) for guiding the photostimulated luminescence light consists of only one of:
an optical light guide part (1046, 2046, 3046, 8046) and
an optical light guide part (1046, 2046. 3046, 8046) with a lens,
wherein the optical light guide part (1046, 2046, 3046, 8046) is either a hollow light guide or a translucent body.

2. The radiological image reader (1002, 12002, 13002) according to claim 1.
wherein said excitation light optical system (1034, 8034) comprises a first bending optical element (1016, 8016) provided on said rotation axis (RA) for bending said excitation light (EL) that has reached from a direction in which said rotation axis (RA) extends toward a direction inclined with respect to said rotation axis (RA); and
wherein said rotation mechanism (1022, 6022, 6022a, 7022, 8022) is configured to cause said first bending optical element (1016, 8016) to rotate around said rotation axis (RA).

3. The radiological image reader (1002, 12002, 13002) according to claim 2.
wherein said excitation light optical system (1034, 8034) further comprises a second bending optical element (1014. 8014) secured separately from said rotation mechanism (1022, 6022, 6022a. 7022, 8022) on said rotation axis (RA) for guiding the excitation light (EL) that has reached from the direction inclined with respect to said rotation axis (RA) to said first bending optical element (1016, 8016) by bending toward the direction in which said rotation axis (RA) extends.

4. The radiological image reader (1002, 12002, 13002) according to any one of the preceding claims,
wherein part of an optical path of the excitation light optical system (1034, 8034) and part of an optical path of the photostimulated luminescence light optical system (1040, 2040, 3040, 8040) pass through a common optical light guide part (1046, 2046, 3046, 3046a, 8046).

5. The radiological image reader (1002, 12002, 13002) according to claim 4,
wherein:
said photostimulated luminescence light optical system (1040, 2040, 3040, 8040) is part of a structure (1018, 2018. 3018. 3018a, 4018, 5018, 6018, 6018a, 7018, 8018) provided between said photodetector (1010, 6010a, 8010) and said scanning plane (SP);
the optical light guide part (1046, 2046, 3046, 3046a, 8046) having a light inlet (1048, 2048, 3048, 3048a, 8048) for photostimulated luminescence light (PL) on a surface (1042, 2042, 3042, 4042, 8042) opposed to said scanning plane (SP) and a light outlet (1050, 2050, 3050, 3050a. 8050) for photostimulated luminescence light (PL) on a surface (1044, 2044, 3044, 4044, 8044) opposed to said photodetector (1010, 6010a, 8010) is formed in said structure (1018, 2018, 3018, 3018a, 4018, 5018, 6018, 6018a, 7018, 8018); and
said excitation light optical system (1034, 8034) is configured to guide the excitation light (EL) from said light source (1008, 8008) to said scanning plane (SP) through said optical light guide part (1046, 2046, 3046, 3046a, 8046).

6. The radiological image reader (1002, 12002, 13002) according to claim 5,
wherein an optical axis of said photostimulated luminescence light optical system (1040, 2040, 3040) is configured to pass through the irradiation point (P).

7. The radiological image reader (1002, 12002, 13002) according to claim 4,
wherein:
said photostimulated luminescence light optical system (1040, 2040, 3040) is part of a structure (1018, 2018, 3018, 3018a, 4018, 5018, 6018, 6018a, 7018) provided between said photodetector and said scanning plane (SP); and
said rotation mechanism (1022, 6022, 6022a, 7022) is configured to cause said structure (1018, 2018, 3018, 3018a, 4018, 5018, 6018, 6018a, 7018) to rotate around said rotation axis (RA).

8. The radiological image reader (1002, 12002. 13002) according to claim 7,
wherein said structure (1018, 3018. 3018a, 4018, 5018, 6018. 6018a, 7018) is a hollow body in which a hollow optical light guide part as said optical light guide part (1046, 3046, 3046a) and having a light inlet (1048, 3048, 3048a) for photostimulated luminescence light (PL) and a light outlet (1050, 3050, 3050a) for photostimulated luminescence light (PL) and having a reflection surface for photostimulated luminescence light (PL) on an inner surface (1052, 3052, 3052a) is formed, the light inlet (1048, 3048, 3048a) being opposed to said scanning plane (SP), the light outlet (1050, 3050, 3050a) being opposed to said photodetector (1010, 6010a).

9. The radiological image reader (1002, 12002, 13002) according to claim 7,
wherein said structure (2018) includes a solid optical light guide part as said optical light guide part (2046) having a light inlet (2048) for photostimulated luminescence light (PL) and a light outlet (2050) for photostimulated luminescence light (PL), the light inlet (2048) being opposed to said scanning plane (SP), the light outlet (2050) being opposed to said photodetector (1010).

10. The radiological image reader (1002, 12002, 13002) according to claim 8 or 9,
wherein said optical light guide part (1046, 2046, 3046, 3046a) has an oval spherical shape, cylindrical shape or conical shape.

11. The radiological image reader (1002, 12002, 13002) according to any one of claims 8 to 10,
wherein said structure (3018) comprises a lens (3200) provided to said light inlet (3048) and is configured to guide the photostimulated luminescence light (PL) to an inside of said optical light guide part (3046).

12. The radiological image reader (1002, 12002, 13002) according to any one of claims 8 to 11,
wherein:
said light inlet (1048, 2048, 3048, 3048a) is formed apart from said rotation axis (RA); and
said light outlet (1050, 2050, 3050, 3050a) is formed on said rotation axis (RA).

13. The radiological image reader (1002, 12002, 13002) according to claim 1,
wherein:
said photostimulated luminescence light optical system (8040) is part of a structure (8018) provided between said photodetector (8010) and said scanning plane (SP) to be secured separately from said rotation mechanism (8022);
an optical light guide part (8046) having a light inlet (8048) for photostimulated luminescence light (PL) on a surface (8042) opposed to said scanning plane (SP) and a light outlet (8050) for photostimulated luminescence light (PL) on a surface (8044) opposed to said photodetector (8010) is formed in the structure (8052); and
a surface (8052) of said optical light guide part (8046) is a concave reflecting mirror having rotation symmetry of the rotation axis (RA) and is configured to collect the photostimulated luminescence light (PL) entering from said light inlet (8048) to said light outlet (8050).

14. The radiological image reader (1002, 12002, 13002) according to any one of claims 7 to 13,
further comprising a blower mechanism (4200, 5200, 8530) for guiding air toward said scanning plane (SP).

15. The radiological image reader (1002, 12002. 13002) according to any one of claims 8 to 14,
further comprising an optical filter (1012, 8012) interposed between said photodetector (1010, 6010a) and said structure (1018, 2018, 3018, 3018a, 4018, 5018, 6018, 6018a. 7018) and having a higher transmittance of a wavelength of the photostimulated luminescence light (PL) than a transmittance of a wavelength of the excitation light (EL).

16. The radiological image reader (1002, 12002, 13002) according to any one of the preceding claims,
further comprising:
a housing (1028) accommodating said light source (1008, 8008), said scanning mechanism (1036, 8036) and said photodetector (1010, 6010a, 8010); and
a dust collecting mechanism (1032) for collecting dust inside said housing (1028).

17. The radiological image reader (1002, 12002. 13002) according to any one of the preceding claims,
wherein said relative movement mechanism (1006, 9006, 10006, 12802) is configured to move said medium (IP, IP1, IP2, IP3, IP4) relative to said scanning mechanism (1036, 8036) in a linear manner.

18. The radiological image reader (1002) according to any one of claims, wherein:
said scanning mechanism (1036, 8306) is secured; and
said relative movement mechanism (1006, 9006, 10006) is configured to move said holder (1080, 9602, 10602).

19. The radiological image reader (12002) according to any one of the preceding claims, wherein:
said holder (12080) is secured; and
said relative movement mechanism (12802) is configured to move said scanning mechanism.

20. The radiological image reader (12002) according to claim 19,
wherein said relative movement mechanism (12802) is configured to move said light source integrally with said scanning mechanism.

## Patentansprüche

1. Leseeinrichtung (1002, 12002, 13002) für radiologische Bilder zum Lesen eines radiologischen Bildes von einem Medium (IP, IP1, IP2, IP3, IP4), das eine Oberfläche (S) zum Erzeugen radiologischer Bilder besitzt, die photostimulierbaren Phosphor enthält,
mit:
einem Halter (1080, 9602, 10602, 12080, 13080), um das Medium (IP, IP1, IP2, IP3, IP4) auf ebene Weise zu halten;
einer Lichtquelle (1008, 8008), um Erregungslicht (EL) zu emittieren;
einem Abtastmechanismus (1036, 8036), um zu veranlassen, dass sich ein optischer Weg des Erregungslichts (EL), das von der Lichtquelle (1008, 8008) emittiert wird, um eine Drehachse (RA) dreht, die zu einer Abtastebene (SP) senkrecht ist, die die Oberfläche (S) für die Erzeugung radiologischer Bilder des Mediums (IP, IP1, IP2, IP3, IP4) enthält, das von dem Halter (1080, 9602, 10602, 12080, 13080) gehalten wird und von der Lichtquelle (1008, 8008) beabstandet ist, und um zu veranlassen, dass sich ein Bestrahlungspunkt (P), auf den das von der Lichtquelle (1008, 8008) emittierte Erregungslicht (EL) gestrahlt wird, auf der Abtastebene (SP) kreisförmig bewegt;
einem Photodetektor (1010, 6010a, 8010), um photostimuliertes Lumineszenzlicht (PL), das von dem Bestrahlungspunkt (P) emittiert wird, zu detektieren; und
einem optischen System (1040, 2040, 3040, 8040) für photostimuliertes Lumineszenzlicht, um das photostimulierte Lumineszenzlicht (PL), das von dem Bestrahlungspunkt (P) emittiert wird, zu dem Photodetektor (1010, 6010a, 8010) zu führen;
einem Relativbewegungsmechanismus (1006, 9006, 10006, 12802), um den Halter (1080, 9602, 10602, 12080, 13080) dazu zu veranlassen, sich in einer Richtung senkrecht zu der Drehachse (RA) relativ zu dem Abtastmechanismus (1036, 8036) zu bewegen;
wobei der Abtastmechanismus (1036, 8036) enthält:
ein optisches System (1034, 8034), für Erregungslicht, um das Erregungslicht (EL) zu dem Bestrahlungspunkt (P) in einem Abstand von der Drehachse (RA) zu führen; und
einen Drehmechanismus (1022, 6022, 6022a, 7022, 8022), um zu veranlassen, dass sich wenigstens ein Teil des optischen Systems (1034, 8034) für Erregungslicht um die Drehachse (RA) dreht, und
wobei der Photodetektor (1010, 6010a, 8010) an der Drehachse (RA) vorgesehen ist,
**dadurch gekennzeichnet,**
**dass** das optische System (1040, 2040, 3040, 8040) für photostimuliertes Lumineszenzlicht, um das photostimulierte Lumineszenzlicht zu führen, nur aus einem der folgenden Teile besteht:
ein optisches Lichtführungsteil (1046, 2046, 3046, 8046) und
ein optisches Lichtführungsteil (1046, 2046, 3046, 8046) mit einer Linse,
wobei das optische Lichtführungsteil (1046, 2046, 3046, 8046) entweder ein hohler Lichtleiter oder ein lichtdurchlässiger Körper ist.

2. Leseeinrichtung (1002, 12002, 13002) für radiologische Bilder nach Anspruch 1,
wobei das optische System (1034, 8034) für Erregungslicht ein erstes optische Umlenkelement (1016, 8016), das an der Drehachse (RA) vorgesehen ist, aufweist, um das Erregungslicht (EL), das aus einer Richtung ankommt, in der sich die Drehachse (RA) erstreckt, in eine Richtung umzulenken, die in Bezug auf die Drehachse (RA) geneigt ist;
und
wobei der Drehmechanismus (1022, 6022, 6022a, 7022, 8022) konfiguriert ist, um zu bewirken, dass sich das erste optische Umlenkelement (1016, 8016) um die Drehachse (RA) dreht.

3. Leseeinrichtung (1002, 12002, 13002) für radiologische Bilder nach Anspruch 2,
wobei das optische System (1034, 8034) für Erregungslicht ferner ein zweites optisches Umlenkelement (1014, 8014) aufweist, das getrennt von dem Drehmechanismus (1022, 6022, 6022a, 7022, 8022) an der Drehachse (RA) befestigt ist, um das Erregungslicht (EL), das aus der in Bezug auf die Drehachse (RA) geneigten Richtung ankommt, zu dem ersten optischen Umlenkelement (1016, 8016) zu führen, indem es in die Richtung umlenkt, in der sich die Drehachse (RA) erstreckt.

4. Leseeinrichtung (1002, 12002, 13002) für radiologische Bilder nach einem der vorhergehenden Ansprüche,
wobei ein Teil eines optischen Wegs des optischen Systems (1034, 8034) für Erregungslicht und ein Teil eines optischen Wegs des optischen Systems (1040, 2040, 3040, 8040) für photostimuliertes Lumineszenzlicht durch ein gemeinsames optisches Lichtführungsteil (1046, 2046, 3046, 3046a, 8046) verlaufen.

5. Leseeinrichtung (1002, 12002, 13002) für radiologische Bilder nach Anspruch 4,
wobei:
das optische System (1040, 2040, 3040, 8040) für photostimuliertes Lumineszenzlicht ein Teil einer Struktur (1018, 2018, 3018, 3018a, 4018, 5018, 6018, 6018a, 7018, 8018) ist, die zwischen dem Photoleiter (1010, 6010a, 8010) und der Abtastebene (SP) vorgesehen ist;
das optische Lichtführungsteil (1046, 2046, 3046, 3046a, 8046), das einen Lichteinlass (1048, 2048, 3048, 4048a, 8048) für photostimuliertes Lumineszenzlicht (PL) auf einer Oberfläche (1042, 2042, 3042, 4042, 8042) gegenüber der Abtastebene (SP) und einen Lichtauslass (1050, 2050, 3050, 3050a, 8050) für photostimuliertes Lumineszenzlicht (PL) auf einer Oberfläche (1044, 2044, 3044, 4044, 8044) gegenüber dem Photodetektor (1010, 6010a, 8010) besitzt, in der Struktur (1018, 2018, 3018, 3018a, 4018, 5018, 6018, 6018a, 7018, 8018) gebildet ist; und
das optische System (1034, 8034) für Erregungslicht konfiguriert ist, um das Erregungslicht (EL) von der Lichtquelle (1008, 8008) zu der Abtastebene (SP) durch das optische Lichtführungsteil (1046, 2046, 3046, 3046a, 8046) zu führen.

6. Leseeinrichtung (1002, 12002, 13002) für radiologische Bilder nach Anspruch 5,
wobei eine optische Achse des optischen Systems (1040, 2040, 3040) für photostimuliertes Lumineszenzlicht konfiguriert ist, um durch den Bestrahlungspunkt (P) zu verlaufen.

7. Leseeinrichtung (1002, 12002, 13002) für radiologische Bilder nach Anspruch 4,
wobei:
das optische System (1040, 2040, 3040) für photostimuliertes Lumineszenzlicht ein Teil einer Struktur (1018, 2018, 3018, 3018a, 4018, 5018, 6018, 6018a, 7018) ist, die zwischen dem Photodetektor und der Abtastebene (SP) vorgesehen ist; und
der Drehmechanismus (1022, 6022, 6022a, 7022) konfiguriert ist, um die Struktur (1018, 2018, 3018, 3018a, 4018, 5018, 6018, 6018a, 7018) dazu zu veranlassen, sich um die Drehachse (RA) zu drehen.

8. Leseeinrichtung (1002, 12002, 13002) für radiologische Bilder nach Anspruch 7,
wobei die Struktur (1018, 3018, 3018a, 4018, 5018, 6018, 6018a, 7018) ein hohler Körper ist, in dem ein hohles optisches Lichtführungsteil als das optische Lichtführungsteil (1046, 3046, 3046a) gebildet ist, das einen Lichteinlass (1048, 3048, 3048a) für photostimuliertes Lumineszenzlicht (PL) und einen Lichtauslass (1050, 3050, 3050a) für photostimuliertes Lumineszenzlicht (PL) besitzt und eine Reflexionsoberfläche für photostimuliertes Lumineszenzlicht (PL) auf einer inneren Oberfläche (1052, 3052, 3052a) besitzt, wobei sich der Lichteinlass (1048, 3048, 3048a) gegenüber der Abtastebene (SP) befindet und der Lichtauslass (1050, 3050, 3050a) sich gegenüber dem Photodetektor (1010, 6010a) befindet.

9. Leseeinrichtung (1002, 12002, 13002) für radiologische Bilder nach Anspruch 7,
wobei die Struktur (2018) ein massives optisches Lichtführungsteil als das optische Lichtführungsteil (2046) aufweist, das einen Lichteinlass (2048) für photostimuliertes Lumineszenzlicht (PL) und einen Lichtauslass (2050) für photostimuliertes Lumineszenzlicht (PL) besitzt, wobei sich der Lichteinlass (2048) gegenüber der Abtastebene (SP) befindet und der Lichtauslass (2050) sich gegenüber dem Photodetektor (1010) befindet.

10. Leseeinrichtung (1002, 12002, 13002) für radiologische Bilder nach Anspruch 8 oder 9,
wobei das optische Lichtführungsteil (1046, 2046, 3046, 3046a) eine ovalsphärische Form, eine zylindrische Form oder eine konische Form besitzt.

11. Leseeinrichtung (1002, 12002, 13002) für radiologische Bilder nach einem der Ansprüche 8 bis 10,
wobei die Struktur (3018) eine Linse (3200) aufweist, die an dem Lichteinlass (3048) vorgesehen ist und konfiguriert ist, um das photostimulierte Lumineszenzlicht (PL) in den Innenraum des optischen Lichtführungsteils (3046) zu führen.

12. Leseeinrichtung (1002, 12002, 13002) für radiologische Bilder nach einem der Ansprüche 8 bis 11,
wobei:
der Lichteinlass (1048, 2048, 3048, 3048a) in einem Abstand von der Drehachse (RA) ausgebildet ist; und
der Lichtauslass (1050, 2050, 3050, 3050a) an der Drehachse (RA) ausgebildet ist.

13. Leseeinrichtung (1002, 12002, 13002) für radiologische Bilder nach Anspruch 1,
wobei:
das optische System (8040) für photostimuliertes Lumineszenzlicht ein Teil einer Struktur (8018) ist, die zwischen dem Photodetektor (8010) und der Abtastebene (SP) vorgesehen ist und getrennt von dem Drehmechanismus (8022) befestigt ist;
ein optisches Lichtführungsteil (8046), das einen Lichteinlass (8048) für photostimuliertes Lumineszenzlicht (PL) auf einer Oberfläche (8042) gegenüber der Abtastebene (SP) und einen Lichtauslass (8050) für photostimuliertes Lumineszenzlicht (PL) auf einer Oberfläche (8044) gegenüber dem Photodetektor (8010) besitzt, in der Struktur (8052) gebildet ist; und
eine Oberfläche (8052) des optischen Lichtführungsteils (8046) ein konkaver reflektierender Spiegel mit einer Drehsymmetrie bezüglich der Drehachse (RA) ist und konfiguriert ist, um das photostimulierte Lumineszenzlicht (PL), das von dem Lichteinlass (8048) eintritt, für den Lichtauslass (8050) zu sammeln.

14. Leseeinrichtung (1002, 12002, 13002) für radiologische Bilder nach einem der Ansprüche 7 bis 13,
die ferner einen Gebläsemechanismus (4200, 5200, 8530) aufweist, um Luft zu der Abtastebene (SP) zu führen.

15. Leseeinrichtung (1002, 12002, 13002) für radiologische Bilder nach einem der Ansprüche 8 bis 14,
die ferner ein optisches Filter (1012, 8012) aufweist, das zwischen den Photodetektor (1010, 6010a) und die Struktur (1018, 2018, 3018, 3018a, 4018, 5018, 6018, 6018a, 7018) eingefügt ist und eine Durchlässigkeit besitzt, die für eine Wellenlänge des photostimulierten Lumineszenzlichts (PL) höher ist als für eine Wellenlänge des Erregungslichts (EL).

16. Leseeinrichtung (1002, 12002, 13002) für radiologische Bilder nach einem der vorhergehenden Ansprüche,
ferner mit:
einem Gehäuse (1028), das die Lichtquelle (1008, 8008), den Abtastmechanismus (1036, 8036) und den Photodetektor (1010, 6010a, 8010) aufnimmt; und
einem Staubsammelmechanismus (1032), um Staub in dem Gehäuse (1028) zu sammeln.

17. Leseeinrichtung (1002, 12002, 13002) für radiologische Bilder nach einem der vorhergehenden Ansprüche,
wobei der Relativbewegungsmechanismus (1006, 9006, 10006, 12802) konfiguriert ist, um das Medium (IP, IP1, IP2, IP3, IP4) relativ zu dem Abtastmechanismus (1036, 8036) geradlinig zu bewegen.

18. Leseeinrichtung (1002, 12002, 13002) für radiologische Bilder nach einem der vorhergehenden Ansprüche, wobei:
der Abtastmechanismus (1036, 8306) befestigt ist; und
der Relativbewegungsmechanismus (1006, 9006, 10006) konfiguriert ist, um den Halter (1080, 9602, 10602) zu bewegen.

19. Leseeinrichtung (1002, 12002, 13002) für radiologische Bilder nach einem der vorhergehenden Ansprüche, wobei:
der Halter (12080) befestigt ist; und
der Relativbewegungsmechanismus (12802) konfiguriert ist, um den Abtastmechanismus zu bewegen.

20. Leseeinrichtung (1002, 12002, 13002) für radiologische Bilder nach Anspruch 19,
wobei der Relativbewegungsmechanismus (12802) konfiguriert ist, um die Lichtquelle einteilig mit dem Abtastmechanismus zu bewegen.

## Revendications

1. Lecteur d'image radiologique (1002, 12002, 13002) pour lire une image radiologique à partir d'un support (IP, IP1, IP2, IP3, IP4) possédant une surface de formation d'image radiologique (S) comprenant un phosphore pouvant être photo-stimulé,
comprenant :
un élément de retenue (1080, 9602, 10602, 12080, 13080) retenant le support (IP, IP1, IP2, IP3, IP4) de manière plate ;
une source lumineuse (1008, 8008) pour émettre une lumière d'excitation (EL) ;
un mécanisme de balayage (1036, 8036) pour entraîner la rotation d'un trajet optique de la lumière d'excitation (EL) émise à partir de ladite source lumineuse (1008, 8008) autour d'un axe de rotation (RA) perpendiculaire à un plan de balayage (SP) comprenant la surface de formation d'image radiologique (S) du support (IP, IP1, IP2, IP3, IP4) retenu par ledit élément de retenue (1080, 9602, 10602, 12080, 13080) et éloigné de ladite source lumineuse (1008, 8008), et pour entraîner le mouvement circulaire d'un point d'irradiation (P) à l'endroit duquel la lumière d'excitation (EL) émise à partir de ladite source lumineuse (1008, 8008) est irradiée sur ledit plan de balayage (SP) ;
un photo-détecteur (1010, 6010a, 8010) pour détecter une lumière à luminescence photo-stimulée (PL) émise à partir dudit point d'irradiation (P) ; et
un système optique de lumière à luminescence photo-stimulée (1040, 2040, 3040, 8040) pour guider la lumière à luminescence photo-stimulée (PL), émise à partir du point d'irradiation (P) vers ledit photo-détecteur (1010, 6010a, 8010) ;
un mécanisme de mouvement relatif (1006, 9006, 10006, 12802) pour entraîner le mouvement dudit élément de retenue (1080, 9602, 10602, 12080, 13080) dans une direction perpendiculaire audit axe de rotation (RA), par rapport audit mécanisme de balayage (1036, 8036) ;
dans lequel ledit mécanisme de balayage (1036, 8036) comprend :
un système optique de lumière d'excitation (1034, 8034) pour guider la lumière d'excitation (EL) vers le point d'irradiation (P) éloigné dudit axe de rotation (RA) ; et
un mécanisme de rotation (1022, 6022, 6022a, 7022, 8022) pour entraîner la rotation d'au moins une partie dudit système optique de lumière d'excitation (1034, 8034) autour dudit axe de rotation (RA), et
dans lequel ledit photo-détecteur (1010, 6010a, 8010) est prévu sur ledit axe de rotation (RA) ;
**caractérisé en ce que**
ledit système optique de lumière à luminescence photo-stimulée (1040, 2040, 3040, 8040) pour guider la lumière à luminescence photo-stimulée est constitué seulement d'un élément parmi :
une partie de conduit de lumière optique (1046, 2046, 3046, 8046) et
une partie de conduit de lumière optique (1046, 2046, 3046, 8046) avec une lentille,
dans lequel la partie de conduit de lumière optique (1046, 2046, 3046, 8046) est un conduit de lumière creux ou un corps translucide.

2. Lecteur d'image radiologique (1002, 12002, 13002) selon la revendication 1,
dans lequel ledit système optique de lumière d'excitation (1034, 8034) comprend un premier élément optique de courbure (1016, 8016) prévu sur ledit axe de rotation (RA) pour courber ladite lumière d'excitation (EL) qui est arrivée à partir d'une direction dans laquelle ledit axe de rotation (RA) s'étend vers une direction inclinée par rapport audit axe de rotation (RA) ; et
dans lequel ledit mécanisme de rotation (1022, 6022, 6022a, 7022, 8022) est configuré pour entraîner la rotation dudit premier élément optique de courbure (1016, 8016) autour dudit axe de rotation (RA).

3. Lecteur d'image radiologique (1002, 12002, 13002) selon la revendication 2,
dans lequel ledit système optique de lumière d'excitation (1034, 8034) comprend en outre un second élément optique de courbure (1014, 8014) fixé séparément dudit mécanisme de rotation (1022, 6022, 6022a, 7022, 8022) sur ledit axe de rotation (RA) pour guider la lumière d'excitation (EL) qui est arrivée à partir de la direction inclinée par rapport audit axe de rotation (RA) vers ledit premier élément optique de courbure (1016, 8016) par courbure vers la direction dans laquelle ledit axe de rotation (RA) s'étend.

4. Lecteur d'image radiologique (1002, 12002, 13002) selon une quelconque des revendications précédentes,
dans lequel une partie d'un trajet optique du système optique de lumière d'excitation (1034, 8034) et une partie d'un trajet optique du système optique de lumière à luminescence photo-stimulée (1040, 2040, 3040, 8040) passent à travers une partie commune de conduit de lumière optique (1046, 2046, 3046, 3046a, 8046).

5. Lecteur d'image radiologique (1002, 12002, 13002) selon la revendication 4, dans lequel :
ledit système optique de lumière à luminescence photo-stimulée (1040, 2040, 3040, 8040) est une partie d'une structure (1018, 2018, 3018, 3018a, 4018, 5018, 6018, 6018a, 7018, 8018) prévue entre ledit photo-détecteur (1010, 6010a, 8010) et ledit plan de balayage (SP) :
la partie de conduit de lumière optique (1046, 2046, 3046, 3046a, 8046) possédant une entrée de lumière (1048, 2048, 3048, 3048a, 8048) pour une lumière à luminescence photo-stimulée (PL) sur une surface (1042, 2042, 3042, 4042, 8042) opposée audit plan de balayage (SP) et une sortie de lumière (1050, 2050, 3050, 3050a, 8050) pour une lumière à luminescence photo-stimulée (PL) sur une surface (1044, 2044, 3044, 4044, 8044) opposée audit photo-détecteur (1010, 6010a, 8010) est formée dans ladite structure (1018, 2018, 3018, 3018a, 4018, 5018, 6018, 6018a, 7018, 8018) ; et
ledit système optique de lumière d'excitation (1034, 8034) est configuré pour guider la lumière d'excitation (EL) de ladite source lumineuse (1008, 8008) audit plan de balayage (SP) à travers ladite partie de conduit de lumière optique (1046, 2046, 3046, 3046a, 8046).

6. Lecteur d'image radiologique (1002, 12002, 13002) selon la revendication 5,
dans lequel un axe optique dudit système optique de lumière à luminescence photo-stimulée (1040, 2040, 3040) est configuré pour traverser le point d'irradiation (P),

7. Lecteur d'image radiologique (1002, 12002, 13002) selon la revendication 4, dans lequel :
ledit système optique de lumière à luminescence photo-stimulée (1040, 2040, 3040) est une partie d'une structure (1018, 2018, 3018, 3018a, 4018, 5018, 6018, 6018a, 7018) prévue entre ledit photo-détecteur et ledit plan de balayage (SP) ; et
ledit mécanisme de rotation (1022, 6022, 6022a, 7022) est configuré pour entraîner la rotation de ladite structure (1018, 2018, 3018, 3018a, 4018, 5018, 6018, 6018a, 7018) autour dudit axe de rotation (RA).

8. Lecteur d'image radiologique (1002, 12002, 13002) selon la revendication 7,
dans lequel ladite structure (1018, 3018, 3018a, 4018, 5018, 6018, 6018a, 7018) est un corps creux dans lequel est formée une partie creuse de conduit de lumière optique en tant que partie de conduit de lumière optique (1046, 3046, 3046a) et possédant une entrée de lumière (1048, 3048, 3048a) pour une lumière à luminescence photo-stimulée (PL) et une sortie de lumière (1050, 3050, 3050a) pour une lumière à luminescence photo-stimulée (PL) et possédant une surface réfléchissante pour une lumière à luminescence photo-stimulée (PL) sur une surface intérieure (1052, 3052, 3052a), l'entrée de lumière (1048, 3048, 3048a) étant opposée audit plan de balayage (SP), la sortie de lumière (1050, 3050, 3050a) étant opposée audit photo-détecteur (1010, 6010a).

9. Lecteur d'image radiologique (1002, 12002, 13002) selon la revendication 7,
dans lequel ladite structure (2018) comprend une partie solide de conduit de lumière optique en tant que partie de conduit de lumière optique (2046) possédant une entrée de lumière (2048) pour une lumière à luminescence photo-stimulée (PL) et une sortie de lumière (2050) pour une lumière à luminescence photo-stimulée (PL), l'entrée de lumière (2048) étant opposée audit plan de balayage (SP), la sortie de lumière (2050) étant opposée audit photo-détecteur (1010).

10. Lecteur d'image radiologique (1002, 12002, 13002) selon la revendication 8 ou 9,
dans lequel ladite partie de conduit de lumière optique (1046, 2046, 3046, 3046a) présente une forme sphérique ovale, une forme cylindrique ou une forme conique.

11. Lecteur d'image radiologique (1002, 12002, 13002) selon une quelconque des revendications 8 à 10,
dans lequel ladite structure (3018) comprend une lentille (3200) prévue sur ladite entrée de lumière (3048) et est configurée pour guider la lumière à luminescence photo-stimulée (PL) vers un intérieur de ladite partie de conduit de lumière optique (3046).

12. Lecteur d'image radiologique (1002, 12002, 13002) selon une quelconque des revendications 8 à 11, dans lequel :
ladite entrée de lumière (1048, 2048, 3048, 3048a) est formée de façon éloignée dudit axe de rotation (RA) ; et
ladite sortie de lumière {1050, 2050, 3050, 3050a) est formée sur ledit axe de rotation (RA),

13. Lecteur d'image radiologique (1002, 12002, 13002) selon la revendication 1, dans lequel :
ledit système optique de lumière à luminescence photo-stimulée (8040) est une partie d'une structure (8018) prévue entre ledit photo-détecteur (8010) et ledit plan de balayage (SP) pour être fixée séparément dudit mécanisme de rotation (8022) ;
une partie de conduit de lumière optique (8046) possédant une entrée de lumière (8048) pour une lumière à luminescence photo-stimulée (FL) sur une surface (8042) opposée audit plan de balayage (SP) et une sortie de lumière (8050) pour une lumière à luminescence photo-stimulée (PL) sur une surface (8044) opposée audit photo-détecteur (8010) est formée dans la structure (8052) ; et
une surface (8052) de ladite partie de conduit de lumière optique (8046) est un miroir réfléchissant concave possédant une symétrie de rotation de l'axe de rotation (RA) et est configurée pour collecter la lumière à luminescence photo-stimulée (FL) entrant à partir de ladite entrée de lumière (8048) vers ladite sortie de lumière (8050).

14. Lecteur d'image radiologique (1002, 12002, 13002) selon une quelconque des revendications 7 à 13,
comprenant en outre un mécanisme souffleur (4200, 5200, 8530) pour guider de l'air vers ledit plan de balayage (SP).

15. Lecteur d'image radiologique (1002, 12002, 13002) selon une quelconque des revendications 8 à 14,
comprenant en outre un filtre optique (1012, 8012) interposé entre ledit photo-détecteur (1010, 6010a) et ladite structure (1018, 2018, 3018, 3018a, 4018, 5018, 6018, 6018a, 7018) et possédant un facteur de transmission plus élevé d'une longueur d'onde de la lumière à luminescence photo-stimulée (PL) qu'un facteur de transmission d'une longueur d'onde de la lumière d'excitation (EL).

16. Lecteur d'image radiologique (1002, 12002, 13002) selon une quelconque des revendications précédentes,
comprenant en outre :
un boîtier (1028) logeant ladite source lumineuse (1008, 8008), ledit mécanisme de balayage (1036, 8036) et ledit photo-détecteur (1010, 6010a, 8010) ; et
un mécanisme de collecte de poussière (1032) pour collecter de la poussière à l'intérieur dudit boîtier (1028).

17. Lecteur d'image radiologique (1002, 12002, 13002) selon une quelconque des revendications précédentes,
dans lequel ledit mécanisme de mouvement relatif (1006, 9006, 10006, 12802) est configuré pour déplacer ledit support (IP, IP1, IP2, IP3, IP4) par rapport audit mécanisme de balayage (1036, 8036) de manière linéaire.

18. Lecteur d'image radiologique (1002) selon une quelconque des revendications, dans lequel :
ledit mécanisme de balayage (1036, 8306) est fixé ; et
ledit mécanisme de mouvement relatif (1006, 9006, 10006) est configuré pour déplacer ledit élément de retenue (1080, 9602, 10602).

19. Lecteur d'image radiologique (12002) selon une quelconque des revendications précédentes, dans lequel :
ledit élément de retenue (12080) est fixé ; et
ledit mécanisme de mouvement relatif (12802) est configuré pour déplacer ledit mécanisme de balayage.

20. Lecteur d'image radiologique (12002) selon la revendication 19,
dans lequel ledit mécanisme de mouvement relatif (12802) est configuré pour déplacer ladite source lumineuse d'un seul tenant avec ledit mécanisme de balayage.
